(19) Europäisches Patentamt
European Patent Office
Office européen des brevets

(11) **EP 2 005 120 B1**

(12) **EUROPÄISCHE PATENTSCHRIFT**

(45) Veröffentlichungstag und Bekanntmachung des Hinweises auf die Patenterteilung:
**10.01.2018 Patentblatt 2018/02**

(21) Anmeldenummer: **07727874.5**

(22) Anmeldetag: **05.04.2007**

(51) Int Cl.:
***G01D 5/245*** *(2006.01)*      ***B62D 15/02*** *(2006.01)*

(86) Internationale Anmeldenummer:
**PCT/EP2007/053406**

(87) Internationale Veröffentlichungsnummer:
**WO 2007/113332 (11.10.2007 Gazette 2007/41)**

(54) **VERFAHREN UND EINRICHTUNG ZUR BESTIMMUNG EINES ABSOLUTWERTS EINER GRÖßE**

METHOD AND DEVICE FOR DETERMINING AN ABSOLUTE VALUE OF A VARIABLE

PROCÉDÉ ET DISPOSITIF DE DÉTERMINATION DE LA VALEUR ABSOLUE D'UNE GRANDEUR

(84) Benannte Vertragsstaaten:
**DE FR**

(30) Priorität: **06.04.2006 DE 102006016225**
**05.04.2007 DE 102007016829**

(43) Veröffentlichungstag der Anmeldung:
**24.12.2008 Patentblatt 2008/52**

(73) Patentinhaber: **Continental Teves AG & Co. oHG**
**60488 Frankfurt (DE)**

(72) Erfinder: **GÄRTNER, Michael**
**60439 Frankfurt am Main (DE)**

(56) Entgegenhaltungen:
**US-A- 5 787 375        US-A1- 2003 212 476**
**US-A1- 2004 024 565    US-A1- 2004 117 088**

## Beschreibung

### Technisches Gebiet

Die Erfindung betrifft ein Verfahren und zum Ermitteln eines Werts eines definierten ersten Bezugspunkts einer ersten Größe, die mittels eines inkremental messenden Sensors eines Kraftfahrzeugs gemessen wird. Die Erfindung betrifft zudem eine zur Durchführung des Verfahrens geeignete Einrichtung zum Ermitteln eines Werts eines definierten ersten Bezugspunkts einer ersten Größe, die mittels eines inkremental messenden Sensors eines Kraftfahrzeugs gemessen wird.

### Hintergrund der Erfindung

Fahrdynamiksysteme werten fahrdynamische Zustandsgrößen, wie die Fahrzeuggeschwindigkeit, die Fahrzeuglängsbeschleunigung, die Fahrzeugquerbeschleunigung, den Gierwinkel, die Gierrate und insbesondere den Lenkwinkel, kontinuierlich aus. Diese fahrdynamischen Zustandsgrößen werden von Sensoren im Fahrzeug erfasst.

Aus Kostengründen werden häufig Inkrementalsensoren für diese Zwecke eingesetzt. Diese messen lediglich Veränderungen des Werts einer Größe, nicht jedoch deren absoluten Wert. Der absolute Wert kann durch Messungen der Veränderungen der Größe relativ zu einem fest definierten Bezugspunkt ermittelt werden. Als ein solcher wird üblicherweise der Punkt verwendet, in dem die Größe den Wert Null annimmt.

Mittels des Inkrementalsensors selbst kann das Vorliegen des fest definierten Bezugspunktes nicht festgestellt werden. Daher liefert der Sensor bzw. dessen Auswertelogik einen Wert, der auf einen undefinierten, zufällig gewählten Bezugspunkt bezogen ist und hier als unzentrierter Wert bezeichnet wird. Bei diesem handelt es sich in der Regel um den beim Einschalten des Sensors vorliegenden Absolutwert der zu messenden Größe, der jedoch im Allgemeinen nicht bekannt ist. Der momentane unzentrierte Wert der Größe unterscheidet sich von deren momentanen Absolutwert somit gerade um den beim Einschalten des Sensors vorliegenden unbekannten Absolutwert.

Zur Ermittlung des Absolutwerts der zu messenden Größe muss bei Verwendung eines relativ messenden Sensors zunächst der Wert des definierten Bezugspunkts - z.B. ausgedrückt als ein unzentrierter Wert der zu messenden Größe - ermittelt werden. Der momentane Absolutwert ergibt sich dann aus der Differenz zwischen dem momentanen unzentrierten Wert und dem unzentrierten Wert des Bezugspunktes.

Der Wert des Bezugspunkts kann etwa durch einen zusätzlichen Sensor ermittelt werden, der einen Indexpuls ausgibt, wenn der Bezugspunkt der zu messenden Größe vorliegt. Der gleichzeitig mit dem Indexpuls erfasste unzentrierte Wert der zu messenden Größe entspricht dabei dem Wert des Bezugspunkts. Ein zusätzlicher Sensor erhöht jedoch die Kosten für die Sensorik des Fahrzeugs und wird daher oft nicht verwendet. Stattdessen wird der vorliegende Absolutwert durch eine auf Fahrzeugmodellen basierende Auswertung des Fahrzeugverhaltens ermittelt, welches durch die Messwerte weiterer, absolut messender Sensoren beschrieben wird. Aus dem ermittelten Absolutwert kann dann auf den Wert des Bezugspunktes geschlossen werden.

Aus der US 2004/117088 A1 ist ein Verfahren zur Feststellung eines Nullwerts eines Lenkwinkels bekannt, bei dem ein nach Ende eines Zündlaufs ein Wert in einem nichtflüchtigen Speicher abgespeichert wird und nach Beginn eines neuen Zündlaufs der gespeicherte Wert mit einem neu ermittelten wahrscheinlichen Wert verglichen wird.

Aus der US 5 787 375 A ist ein Verfahren zur Feststellung eines Nullwerts eines Lenkwinkels bekannt, bei dem die Daten eines Gierratensensors zur Abschätzung einen tastsächlichen Lenkwinkels ausgewertet werden.

Bei bekannten Verfahren zur Bestimmung des Werts des Bezugspunkts einer mit einem Inkrementalsensor gemessenen Größe wird in der Regel eine definierte Fahrsituation vorgegeben, in der das Fahrzeugverhalten anhand der weiteren Messwerte ausgewertet wird. Besonders häufig werden beispielsweise inkremental messende Lenkwinkelsensoren eingesetzt. Hierbei kann der unzentrierte Wert des Nullpunkts des Lenkwinkels, welcher der Geradeausstellung der lenkbaren Fahrzeugräder entspricht, beispielsweise ermittelt werden, während anhand weiterer Messwerte, wie beispielsweise der gemessenen Gierrate des Fahrzeugs und der gemessenen Querbeschleunigung eine Geradeausfahrt festgestellt wird. Der Wert des Nullpunkts entspricht dabei gerade dem während der Geradausfahrt vorliegenden unzentrierten Lenkwinkelwert.

Bei derartigen Verfahren kann der Wert des Bezugspunkts erst dann festgestellt werden, wenn die definierte Fahrsituation auftritt. Oftmals dauert es jedoch relativ lange, bis die definierte Fahrsituation erstmals auftritt. Bis zu diesem Zeitpunkt kann jedoch kein Absolutwert der zu messenden Größe ermittelt werden und die Fahrzeugsysteme, welche diesen Absolutwert als Eingangsgröße verwenden, sind nicht oder nur eingeschränkt betriebsfähig.

### Darstellung der Erfindung

Daher ist es eine Aufgabe der vorliegenden Erfindung, eine möglichst rasche Bestimmung des Werts eines definierten Bezugspunkts einer mit einem Inkrementalsensor gemessenen Größe zu ermöglichen.

Diese Aufgabe wird durch ein Verfahren mit den Merkmalen des Patentanspruchs 1 und eine Einrichtung mit den Merkmalen des Patentanspruchs 17 gelöst. Zweckmäßige Weiterbildungen des Verfahrens sind in den abhängigen Ansprüchen angegeben. Demgemäß ist es vorgesehen, dass ein Verfahren der eingangs genannten Art so durchgeführt wird, dass

- Zwischenwerte des definierten Bezugspunkts in wenigstens zwei Detektionsmodulen unter Heranziehung wenigstens einer zweiten gemessenen Größe ermittelt werden, wobei jedes Detektionsmodul an die Bestimmung des Werts des definierten Bezugspunkts der ersten Größe in einer vorgegebenen Fahrsituation angepasst ist,
- eine Qualitätsstufe für jeden ermittelten Zwischenwert bestimmt wird,
- die Qualitätsstufen der in verschiedenen Detektionsmodulen ermittelten Zwischenwerte verglichen werden und
- der Wert des definierten Bezugspunkts aus den ermittelten Zwischenwerten nach Maßgabe des Ergebnisses des Vergleichs der Qualitätsstufen bestimmt wird.

Ferner wird eine Einrichtung der eingangs genannten Art bereitgestellt, die wenigstens zwei Detektionsmodule umfasst, in denen jeweils ein Zwischenwert des definierten Bezugspunkts unter Heranziehung wenigstens einer zweiten gemessenen Größe ermittelt wird, wobei jedes Detektionsmodul an die Bestimmung des Werts des definierten Bezugspunkts der ersten Größe in einer vorgegebenen Fahrsituation angepasst ist, und wobei jedes Detektionsmodul dazu ausgebildet ist, eine Qualitätsstufe für den ermittelten Zwischenwert zu bestimmen. Ferner umfasst die Einrichtung eine Arbitrierungseinrichtung, die dazu ausgebildet ist, die Qualitätsstufen der in verschiedenen Detektionsmodulen ermittelten Zwischenwerte zu vergleichen und den Wert des definierten Bezugspunkts aus den ermittelten Zwischenwerten nach Maßgabe des Ergebnisses des Vergleichs der Qualitätsstufen zu bestimmen.

Unter dem Wert des definierten Bezugspunkts wird, wie eingangs bereits erläutert, der unzentrierte Wert des definierten Bezugspunkts verstanden, d.h. der auf einen anderen, zufällig gewählten Bezugspunkt bezogene Wert.

Die Erfindung beinhaltet die Idee, dass Zwischenwerte des definierten Bezugspunkts in wenigstens zwei Detektionsmodulen unter Heranziehung wenigstens einer zweiten gemessenen Größe ermittelt werden, wobei jedes Detektionsmodul an die Bestimmung des Werts des definierten Bezugspunkts der ersten Größe in einer vorgegebenen Fahrsituation angepasst ist. Hierdurch liegen mehrere Zwischenwerte für den Wert des definierten Bezugspunktes vor, die jedoch in der Regel eine unterschiedliche Genauigkeit haben. Daher wird für jeden ermittelten Zwischenwert eine Qualitätsstufe bestimmt und der endgültige Wert des Bezugspunkts der ersten Größe wird anhand eines Vergleichs der Qualitätsstufen aus den Zwischenwerten bestimmt.

Die Verwendung mehrerer Detektionsmodule, die jeweils an die Bestimmung des Werts des Bezugspunktes der ersten Größe in einer Fahrsituation angepasst sind, hat den Vorteil, dass eine zuverlässige Bestimmung in mehreren Fahrsituationen vorgenommen werden kann und man nicht auf das Vorliegen einer bestimmten Fahrsituation angewiesen ist. Hierdurch wird in der Regel sehr rasch nach einem Zündungsneustart bzw. nach Fahrtbeginn ein zuverlässiges Ergebnis für den Wert des Bezugspunktes der ersten Größe erhalten.

In einer Ausführungsform des Verfahrens und der Einrichtung ist es vorgesehen, dass als Wert des definierten Bezugspunkts der Zwischenwert mit der höchsten Qualitätsstufe verwendet wird oder dass der Wert des definierten Bezugspunkts aus einer Kombination mehrerer Zwischenwerte ermittelt wird, deren Qualitätsstufen höher als die Qualitätsstufe weiterer Zwischenwerte sind und eine Abweichung voneinander aufweisen, die geringer als eine vorgegebene Abweichung ist.

Auf diese Weise ist sichergestellt, dass für die Bestimmung des endgültigen Werts des definierten Bezugspunktes der Zwischenwert bzw. die Zwischenwerte mit der höchsten Qualitätsstufe herangezogen werden, wodurch ein besonders zuverlässiger Wert für den Bezugspunkt erhalten wird. Die Kombination der Zwischenwerte kann beispielsweise durch Mittel-, Minimal-, oder Maximalwertbildung erfolgen.

Darüber hinaus wurde festgestellt, dass bedingt, durch die Art und Weise der Bestimmung des Werts des definierten Bezugspunktes der ersten Größe, unterschiedliche Genauigkeiten der in den einzelnen Detektionsmodulen ermittelten Zwischenwerte zu erwarten sind.

Eine Weiterbildung des Verfahrens und der Einrichtung ist dadurch gekennzeichnet, dass jedem Detektionsmodul eine Rangstufe entsprechend einer erwarteten Genauigkeit des in dem Detektionsmodul ermittelten Zwischenwerts zugeordnet wird, und dass als Wert des definierten Bezugspunkts der Zwischenwert verwendet wird, welcher in dem Detektionsmodul mit höherer Rangstufe ermittelt worden ist, wenn in mehreren Detektionsmodulen ermittelte Zwischenwerte übereinstimmende Qualitätsstufen haben.

Auf diese Weise ist sichergestellt, dass bei übereinstimmender Qualitätsstufe zweier Zwischenwerte derjenige Zwischenwert gewählt wird, für den - bedingt durch die Art und Weise seiner Bestimmung - die höhere Genauigkeit zu erwarten ist.

Eine Ausgestaltung des Verfahrens und der Einrichtung sieht vor, dass für die Bestimmung der Qualitätsstufen das Vorliegen einer oder mehrerer Fahrbedingungen aus einer Menge vorgegebener Fahrbedingungen geprüft wird, wobei das Vorliegen jeder der vorgegebenen Fahrbedingungen zu einer höheren Ungenauigkeit der Zwischenwerte führt.

Vorteilhaft wird in dieser Ausführungsform bei der Bestimmung der Qualitätsstufen der Zwischenwerte berücksichtigt, ob während der Bestimmung der Zwischenwerte Fahrbedingungen vorgelegen haben, die einen negativen Einfluss auf die Genauigkeit der Zwischenwerte haben, so dass dies bei der Entscheidung, welche Zwischenwerte für die Bestimmung des Bezugspunktwerts der ersten Größe berücksichtigt werden kann. Hierdurch kann erreicht werden, dass nur die Zwischenwerte berücksichtigt werden, die unter "guten Bedingungen" bestimmt worden sind und daher eine hohe Genauigkeit aufweisen.

Ferner sieht eine Ausführungsform des Verfahrens und der Einrichtung vor, dass die Zwischenwerte in den Detektionsmodulen aus zwei oder mehrerer nacheinander ermittelten Einzelwerten bestimmt werden, wobei die Fahrbedingungen aus der Menge der vorgegebenen Fahrbedingungen, die bei der Ermittlung eines ersten Einzelwerts vorlagen, gespeichert werden, und die nachfolgende Ermittlung eines zweiten Einzelwerts nur dann vorgenommen wird, wenn keine zusätzliche Fahrbedingung der Menge von Fahrbedingungen vorliegt.

In dieser Ausführungsform ist es vorteilhaft vorgesehen, dass nach der Erfassung eines Einzelwerts, der für die Bestimmung des Zwischenwerts herangezogen wird, nur dann weitere Einzelwerte erfasst werden, wenn sich die Fahrbedingungen nicht verschlechtern. Hierdurch wird sichergestellt, dass sich die Genauigkeit der Zwischenwerte mit der Zeit erhöht. Die Zwischenwerte können dabei beispielsweise als Mittelwerte der Einzelwerte bestimmt werden.

Eine Ausgestaltung des Verfahrens und der Einrichtung beinhaltet, dass die Menge der vorgegebenen Fahrbedingungen mehrere der folgenden Fahrbedingungen umfasst: die Fahrzeuggeschwindigkeit ist kleiner als ein vorgegebener Grenzwert, der Querneigungswinkel des Fahrzeugs ist größer als ein vorgegebener Schwellenwert, ein Fahrdynamikregelsystem des Fahrzeugs führt einen Regeleingriff zur Beeinflussung des Fahrverhaltens durch.

Die zuvor genannten Fahrbedingungen führen in der Regel zu einer geringeren Genauigkeit eines Zwischenwertes des Bezugspunkts der ersten Fahrzeuggröße. Insbesondere ist bei einem Eingriff eines Fahrdynamikregelsystems davon auszugehen, dass ein instabiler Fahrzustand vorliegt, der mittels des Regelsystems stabilisiert werden soll. Bei den Regeleingriffen kann es sich beispielsweise um Bremsen- oder Motoreingriffe handeln oder um Eingriffe in das Lenksystem des Fahrzeugs.

Wie eingangs bereits erläutert, werden relativ messende Sensoren in Kraftfahrzeugen besonders häufig zum Messen des Lenkwinkels an den lenkbaren Rädern des Fahrzeugs oder an einem Lenkrad des Fahrzeugs verwendet.

In einer Ausführungsform des Verfahrens und der Einrichtung ist es vorgesehen, dass es sich bei der ersten Größe um einen Lenkwinkel handelt, der den Drehwinkel eines Lenkrads des Fahrzeugs repräsentiert und dass der definierte Bezugspunkt der Geradeausstellung des Lenkrads entspricht.

Eine weitere Ausführungsform Verfahrens und der Einrichtung sieht vor, dass ein erstes Detektionsmodul vorgesehen ist, das an eine Bestimmung des Werts des definierten Bezugspunkts der ersten Größe während einer Kurvenfahrt angepasst ist.

Die Fahrt durch eine Kurve ist eine sehr häufig vorkommende Fahrsituation. Daher sieht die zuvor genannte Ausführungsform vorteilhaft vor, dass ein Detektionsmodul vorgesehen ist, dass zur Bestimmung des Werts des definierten Bezugspunkts der ersten Größe während einer Kurvenfahrt dient.

Eine Weiterbildung Verfahrens und der Einrichtung ist dadurch gekennzeichnet, dass der Zwischenwert in dem ersten Detektionsmodul aus einer Differenz zwischen einem Absolutwert der ersten Größe, der in einem Fahrzeugmodell unter Heranziehung wenigstens eines gemessen Absolutwerts einer zweiten Größe berechnet wird, und einem aktuellen Wert der ersten Größe bestimmt wird.

Eine Ausführungsform des Verfahrens und der Einrichtung zeichnet sich dadurch aus, dass ein zweites Detektionsmodul vorgesehen ist, das an eine Bestimmung des Werts des definierten Bezugspunktes der ersten Größe während einer Slalomfahrt und/oder einer Schlechtwegefahrt angepasst ist, wobei der in dem zweiten Detektionsmodul ermittelte Zwischenwert des definierten Bezugspunkts einem Wert der ersten Größe entspricht, der bei einem Vorzeichenwechsel einer gemessenen Gierrate des Fahrzeugs vorliegt.

Insbesondere Slalomfahrten sind regelmäßig auftretende Fahrsituationen, die es ermöglichen, den Wert des definierten Bezugspunktes der ersten Größe auf eine weitere Art, die unabhängig von der Bestimmung bei Kurvenfahrt ist, zu ermitteln. Daher ist in dieser Ausführungsform vorteilhaft ein zweites Detektionsmodul vorgesehen, welches an eine Bestimmung des Werts des definierten Bezugspunktes der ersten Größe während einer Slalomfahrt und/oder einer Schlechtwegefahrt angepasst ist.

Es wurde festgestellt, dass der Wert des Bezugspunkts der ersten Größe während einer Slalomfahrt und/oder einer Schlechtwegefahrt in der Regel genauer bestimmt werden kann als während einer Kurvenfahrt.

Daher sieht eine Ausbildung Verfahrens und der Einrichtung vor, dass dem zweiten Detektionsmodul eine höhere Rangstufe zugeordnet ist als dem ersten Detektionsmodul.

Darüber hinaus beinhaltet eine Weiterbildung des Verfahrens und der Einrichtung, dass ein drittes Detektionsmodul vorgesehen ist, das an eine Bestimmung des Werts des definierten Bezugspunkts der ersten Größe während einer Geradeausfahrt angepasst ist, wobei der Zwischenwert des definierten Bezugspunkts einem Wert der ersten Größe entspricht, der vorliegt, während eine Geradeausfahrt festgestellt wird.

Bei Geradeausfahrten handelt es sich ebenfalls um regelmäßig auftretende Fahrsituationen, die es ermöglichen, den Wert des definierten Bezugspunktes der ersten Größe auf eine weitere Art und Weise zu bestimmen, die unabhängig den zuvor beschriebenen Bestimmungen bei Kurvenfahrt und Slalom- bzw. Schlechtwegefahrt ist.

Bei einer Geradeausfahrt handelt es sich um einen fest definierten Fahrzustand, dessen Vorliegen mithilfe der im Fahrzeug vorhandenen Sensoren mit hoher Zuverlässigkeit und Genauigkeit festgestellt werden kann. Diese führt zu besonders genauen Ergebnissen für den Wert des definierten Bezugspunktes der ersten Größe.

Daher ist eine Ausführungsform Verfahrens und der Einrichtung dadurch gekennzeichnet, dass dem dritten Detektionsmodul eine höhere Rangstufe zugewiesen wird, als dem zweiten Detektionsmodul.

Bei einer Ausgestaltung Verfahrens und der Einrichtung ist es vorgesehen, dass jedem Zwischenwert eine Unsicherheit zugeordnet wird, die einer Abschätzung des Fehlers des Zwischenwerts entspricht, und dass aus den Unsicherheiten der für die Bestimmung des Werts des Bezugspunkts herangezogenen Zwischenwerte eine Unsicherheit des Werts des Bezugspunkts ermittelt wird.

Vorteilhaft wird in dieser Ausführungsform eine Abschätzung der Fehler der ermittelten Zwischenwerte vorgenommen. Ferner wird aus den Fehlerabschätzung der Zwischenwerte ein Fehler des Werts des Bezugspunkts ermittelt. Dies ermöglicht es, den Wert des Bezugspunktes bereits frühzeitig zu verwenden. Er ist dann zwar in der Regel mit einem größeren Fehler behaftet, bei der Verwendung kann dieser Fehler jedoch berücksichtigt werden.

Ferner sieht eine Ausgestaltung Verfahrens und der Einrichtung vor, dass der Wert des Bezugspunkts zur Ermittlung eines Absolutwerts der ersten Größe herangezogen wird, wobei der Absolutwert in einem Fahrdynamikregelsystem verwendet wird.

Eine Weiterbildung Verfahrens und der Einrichtung zeichnet sich zudem dadurch aus, dass die Unsicherheit des Werts des Bezugspunkts bei der Verwendung des Absolutwerts berücksichtigt wird.

Die Unsicherheit des Werts des Bezugspunktes kann dabei insbesondere dazu verwendet werden, Eintrittsschwellen eines Fahrdynamikregelsystems anzupassen, so dass es trotz einer größeren Ungenauigkeit des Absolutwerts der ersten Größe nicht zu einer Fehlregelung kommt.

Darüber hinaus wird ein Computerprogrammprodukt bereitgestellt, das ein Computerprogramm aufweist, welches Anweisungen zur Ausführung eines Verfahrens nach einem der vorangegangenen Ansprüche mittels einer Recheneinheit umfasst.

Das erfindungsgemäße Verfahren beruht darauf, dass die Bestimmung des Werts des definierten Bezugspunktes der ersten Größe in unabhängigen Detektionsmodulen abläuft. Die Detektion läuft in den unterschiedlichen Detektionsmodulen im Wesentlichen gleichzeitig ab, so dass immer die für die aktuelle Fahrsituation das am besten geeignete Detektionsmodul zur Lenkwinkelermittlung zum Einsatz kommen kann. Stehen mehrere Ergebnisse zur Verfügung, so wird durch eine Entscheidungslogik ermittelt, welcher Zwischenwert von welchem Detektionsmodul aufgrund seiner Qualitätsstufe für die Bestimmung des Werts des definierten Bezugspunktes der ersten Größe herangezogen wird. Jedes Detektionsmodul überwacht und speichert selbstständig die Bedingungen unter denen eine Erkennung stattgefunden hat. Darüber hinaus werden die einzelnen Detektionsmodule von vornherein in eine Rangfolge gebracht, welche die Genauigkeit der typischerweise zu erwartenden Ergebnisse widerspiegelt. Diese Rangfolge der Detektionsmodule bildet zusammen mit der zugehörigen Qualitätsstufe die Grundlage für die Entscheidung, welches Teilergebnis letztlich zur Bestimmung des Werts des definierten Bezugspunkts der ersten Größe verwendet werden soll.

Ferner wird eine Unsicherheit eingeführt, die ebenfalls direkt in den einzelnen Detektionsmodulen abgeschätzt wird. Die Unsicherheit gibt quantitativ den möglichen Fehler des Werts des Bezugspunktes der ersten Größe an, der auf Basis dieser Detektionsmodule bestimmt wurde. Dieser Fehler entspricht dem möglichen Fehler eines Absolutwerts der ersten Größe. Dieser Fehler kann in dem Fahrdynamikregelsystem, welches den Absolutwert der ersten Größe als Eingangssignal nutzt, verwendet werden, um entsprechend Anpassungen, wie beispielsweise Anpassungen von Schwellenwerten, vorzunehmen. Auf diese Weise kann ein Absolutwert schon deutlich früher in einem Fahrdynamiksystem verwendet werden, ohne dass die Gefahr von Fehlregelungen besteht.

Die genannten und weitere Vorteile, Besonderheiten und zweckmäßige Weiterbildungen der Erfindung werden auch anhand der Figuren der beschriebenen Ausführungsbeispiele der Erfindung deutlich.

Kurze Beschreibung der Figuren

In den Figuren ist ein Ausführungsbeispiel der Erfindung schematisch dargestellt. Es zeigt

Fig. 1 eine schematische Darstellung der Lenkanlage eines Fahrzeuges mit einem relativ messenden Winkelgeber;

Fig. 2 ein schematisches Blockschaltbild einer Ausführungsform einer Auswerteeinheit zur Bestimmung eines Werts eines Bezugspunkts eines Lenkwinkels,

Fig. 3 Diagramm, welches schematisch eine Verzögerung als Differenz von Lenkwinkelwerten beschreibt;

## Ausführliche Beschreibung eines Ausführungsbeispiels

Im Folgenden wird beispielhaft beschrieben, wie die Erfindung eingesetzt werden kann, um den Absolutwert eines Lenkwinkels zu bestimmen, der mittels eines relativ messenden Lenkwinkelsensors gemessen wird.

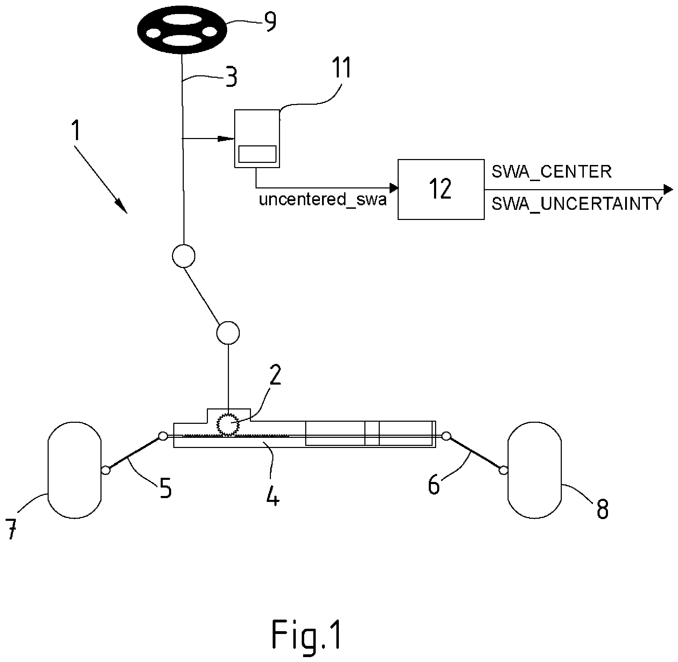

In Figur 1 ist ein Lenksystem eines Fahrzeuges dargestellt, das als Ganzes mit der Bezugsziffer 1 versehen ist. In der beispielhaft dargestellten Ausgestaltung ist die Lenkanlage 1 als Zahnstangenlenkung ausgebildet, bei der ein Ritzel 2, das an der Lenkwelle 3 angebracht ist, in eine Zahnstange 4 eingreift, die seitlich an der Zahnstange 4 befestigte Spurstangen 5, 6 betätigt. Die Spurstangen 5, 6 verschwenken Fahrzeugräder 7, 8. Im Rahmen der Erfindung können jedoch selbstverständlich auch andere dem Fachmann bekannte Lenkanlagen eingesetzt werden.

Ein Lenkrad 9 ist direkt oder über eine weitere Welle mit der Lenkwelle 3 verbunden, wobei die Winkelstellung der Lenkwelle 3 der Winkelstellung des Lenkrads 9 entspricht. Per üblicher Konvention entspricht dabei die Geradeausstellung des Lenkrades 9 bzw. der Lenkwelle 3, d.h. die Stellung, in der die Fahrzeugräder 7, 8 parallel zur Fahrzeuglängsachse ausgerichtet sind, einem Lenkradwinkel von 0°. Bei einer Drehung des Lenkrades 9 im Uhrzeigersinn verkleinert sich der Lenkradwinkel und bei einer Drehung entgegen dem Uhrzeigersinn vergrößert er sich. Üblicherweise ist das Lenkrad 9 bzw. die Lenkwelle 3 in einem Winkelbereich von -720° bis +720° drehbar, d.h. das Lenkrad 9 lässt sich ausgehend von der Geradeausstellung um zwei volle Umdrehungen im Uhrzeigersinn und um zwei volle Umdrehungen entgegen dem Uhrzeigersinn drehen.

An der Lenkwelle 3 ist ein inkremental messender Winkelgeber 11 angeordnet, mit dem die Winkelstellung der Lenkwelle 3 bzw. des Lenkrades 9 messbar ist und der beispielsweise als optischer oder magnetischer Winkelgeber ausgebildet ist. Bei dem Winkelgeber 10 wird beispielsweise eine an der Lenkwelle 3 befestige ringförmige inkrementale Spur mit einer regelmäßigen Struktur durch einen inkrementalen Sensor abgetastet.

Der Winkelgeber 11 bzw. eine in den Figuren nicht dargestellte, dem Winkelgeber zugeordnete Auswerteeinheit liefert als Ausgangssignal einen Lenkwinkelwert, der ausgehend von dem Bezugspunkt bestimmt worden ist, der beim Einschalten des Winkelgebers 11 vorliegt. Dieser Lenkwinkel wird im Folgenden als unzentrierter Lenkwinkel (uncentered_swa) bezeichnet. Der bei Geradeausstellung der lenkbaren Räder 7, 8 bzw. des Lenkrads vorliegende Lenkwinkel hat - ausgedrückt in Form eines unzentrierten Lenkwinkels - im Allgemeinen einen von Null verschiedenen Wert, der im Folgenden als Nullpunktwert bezeichnet wird. Der Nullpunktwert ist gerade die Differenz zwischen dem unzentrierten Lenkwinkel und dem tatsächlichen Lenkwinkel, der im Folgenden auch als zentrierter Lenkwinkel bezeichnet wird. Liegt beim Einschalten des Winkelgebers 11 beispielsweise ein Absolutwert des Lenkwinkels von 30° vor, so hat der Nullpunkt den unzentrierten Wert -30°.

Der Winkelgeber 11 ist signalmäßig mit einer Auswerteeinheit 12 gekoppelt. Diese ermittelt einen unzentrierten Wert des Nullpunkts des Lenkwinkels (SWA_CENTER), der dann zur Bestimmung des Absolutwerts des Lenkwinkels herangezogen werden kann. Bei der in Figur 1 dargestellten Ausführungsform der Erfindung handelt es sich bei dem unzentrierten Wert des Nullpunkts um das Ausgangssignal der Auswerteeinheit 12. Dieses wird dann zusammen mit dem von dem Winkelgeber 11 ausgegebenen Signal an die Fahrzeugsysteme übermittelt, die das Lenkwinkelsignal nutzen. Diese Systeme bestimmen dann den Absolutwert des Lenkwinkels aus der Differenz zwischen dem Sensorsignal und dem unzentrierten Wert des Nullpunkts. Ferner wird in der Auswerteeinrichtung 12 eine Unsicherheit des Nullpunktwerts bestimmt (SWA_UNCERTAINTY), die in den weiteren Fahrzeugsystemen bei der Verwendung des Nullpunktwerts berücksichtigt werden kann. In weiteren Ausführungsformen kann in der Auswerteeinrichtung jedoch auch bereits der Absolutwert des Lenkwinkels ermittelt werden.

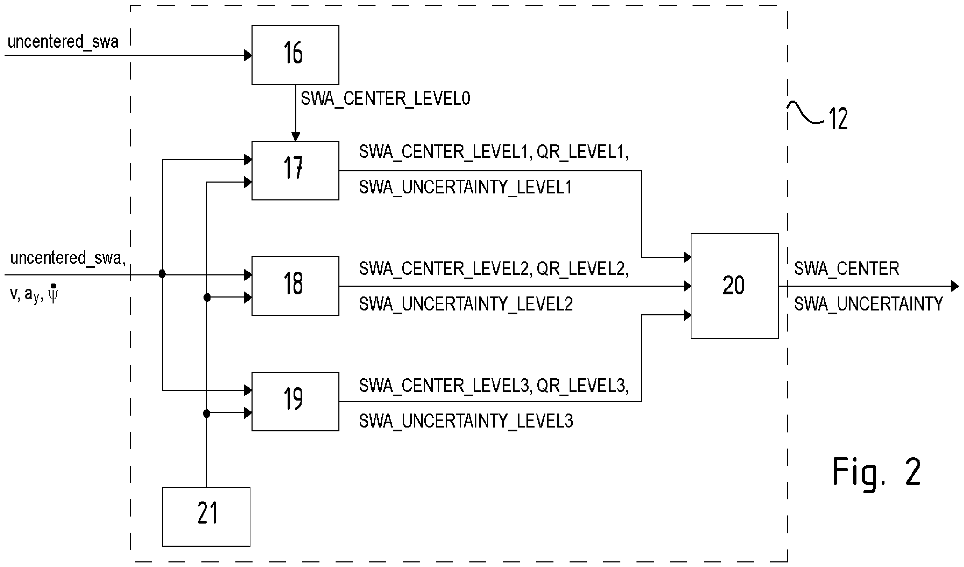

Die Auswerteeinheit 12 ist in Figur 2 schematisch in Form eines Blockdiagramms dargestellt. In der beispielhaft dargestellten Ausführungsform umfasst die Auswerteeinheit vier Detektionsmodule 16, 17, 18, 19, die im Folgenden noch näher erläutert werden. Das Detektionsmodul 16 bestimmt einen Nullpunktwert (SWA_CENTER_LEVEL0) der nur für interne Zwecke in den Detektionsmodulen 17, 18, 19 verwendet wird. Jedes der Detektionsmodule 17, 18, 19 bestimmt fortlaufend Zwischenwerte (SWA_CENTER_LEVEL1, SWA_CENTER_LEVEL2, SWA_CENTER_LEVEL3) für den Nullpunktwert sowie eine Unsicherheit der Zwischenwerte (SWA_UNCERTAINTY_LEVEL1, SWA_UNCERTAINTY_LEVEL2, SWA_UNCERTAINTY_LEVEL3). Zur Ermittlung der Zwischenwerte werden insbesondere die mit einem Gierratensensor gemessene Gierrate $\dot{\psi}$ des Fahrzeugs, die mittels eines Querbeschleunigungssensors gemessene Querbeschleunigung $a_y$ des Fahrzeugs sowie die anhand der Signale von Raddrehzahlsensoren ermittelte Fahrzeuggeschwindigkeit $v$ herangezogen, die in Figur 2 ebenfalls als Eingangsgröße der Detektionsmodule 17, 18, 19 dargestellt sind.

Der endgültige Nullpunktwert SWA_CENTER wird dann aus den Zwischenwerten in einer Arbitrierungseinrichtung 20 ermittelt. Hierfür wird den in den Detektionsmodulen 17, 18, 19 ermittelten Zwischenwerten jeweils die Qualitätsstufe (QR_LEVEL1, QR_LEVEL2, QR_LEVEL3) zugeordnet, für deren Bestimmung insbesondere die Fahrbedingungen herangezogen werden, unter denen die Zwischenwerte ermittelt worden sind. In Abhängigkeit von den Qualitätsstufen wird dann der Nullpunktwert SWA_CENTER ermittelt.

Die Bestimmung der relevanten Fahrbedingungen erfolgt in der Situationsbewertungseinrichtung 21, deren Ergebnisse den Detektionsmodulen 17, 18, 19 zur Ermittlung der Qualitätsstufen herangezogen werden. In der Situationsbewertungseinrichtung 21 wird ermittelt, ob Fahrbedingungen vorliegen, von denen bekannt ist, dass sie einen negativen Einfluss auf die Bestimmung des Bezugspunktes des Lenkwinkels haben. Insbesondere wird geprüft, ob die Fahrgeschwindigkeit klein ist, was beispielsweise festgestellt wird, wenn eine Geschwindigkeit kleiner als 10,8 Kilometer pro Stunde ermittelt wird. Ferner wird geprüft, ob die Fahrbahn geneigt ist, da der Fahrer bei geneigter Fahrbahn in der Regel in Richtung des Anstiegs der Fahrbahn lenkt, wodurch die Geradeausstellung nicht fehlerfrei ermittelt werden kann. Das Vorliegen einer geneigten Fahrbahn wird festgestellt, wenn der Neigungswinkel des Fahrzeugs einen vorgegebenen Wert von beispielsweise 10° überschreitet. Ferner wird geprüft, ob ein Bremseneingriff durch eine Fahrdynamikregelsystem, wie beispielsweise eine Brems- oder Antriebsschlupfregelung oder ein Fahrdynamikregelung erfolgt, da derartige Bremseneingriffe auf eine instabile Fahrsituation hindeuten, in der ebenfalls keine fehlerfreie Ermittlung der Geradeausstellung gewährleistet ist. Gleichfalls kann auch geprüft werden, ob ein Eingriff eines Fahrdynamikregelsystems in die Steuerung des Antriebsmotors erfolgt, was ebenfalls auf eine instabile Fahrsituation hindeutet.

Jeder der zuvor genannten Fahrbedingungen wird ein Flag zugeordnet, das gesetzt wird (d.h. den Wert "wahr" annimmt), wenn die Fahrbedingung vorliegt. Die Flags werden im Folgenden auch als Situationsbewertungsflags bezeichnet und werden für die Bestimmung der Qualitätsstufe in den Detektionsmodulen 17, 18, 19 herangezogen. Wenn im Folgenden von einer Verbesserung oder Verschlechterung der Fahrbedingungen gesprochen wird, ist gemeint, dass ein gesetztes Situationsbewertungsflag zurückgenommen wird bzw. dass ein weiteres Situationsbewertungsflag gesetzt wird.

Im Folgenden werden die verschiedenen Detektionsmodule 16, 17, 18, 19 im Einzelnen beschrieben. Bei den Detektionsmodulen 16, 17, 18, 19 handelt es sich vorzugsweise um Softwaremodule, die auf einem Mikroprozessor in einem Steuergerät des Fahrzeugs ausgeführt werden. Die Detektionsmodule arbeiten (mit Ausnahme des Detektionsmoduls 16) taktweise mit Takten einer vorbestimmten Dauer, die im Folgenden auch als Loops bezeichnet werden.

Den Detektionsmodulen 16, 17, 18, 19 ist jeweils eine Rangstufe zugeordnet, durch die eine Rangfolge entsprechend der erwarteten Genauigkeit der in den Detektionsmodulen 16, 17, 18, 19 ermittelten Teilergebnisse festgelegt wird.

Stillstand (Stufe 0)

Das Detektionsmodul 16, dem die Rangstufe 0 zugeordnet ist, ermittelt einen Nullpunktwert für den Lenkwinkel im Stillstand des Fahrzeugs unmittelbar nach einem Zündungsneustart. Die Geradeausstellung kann im Stillstand des Fahrzeugs nicht festgestellt werden. Daher ist es vorgesehen, dass der (zentrierte) Lenkwinkel, der am Ende des vorhergehenden Zündzyklus vorlag, in dem Detektionsmodul 16 herangezogen wird, um den Nullpunktwert SWA_CENTER_LEVEL0 zu bestimmen. Insbesondere ergibt sich der Nullpunktwert SWA_CENTER_LEVEL0 dabei als negativer Wert dieses Lenkwinkels. Der Nullpunktwert SWA_CENTER_LEVEL0 stimmt jedoch nur dann mit dem tatsächlichen Nullpunktwert überein, wenn das Lenkrad nicht gedreht wurde, während die Zündung abgeschaltet war. Im Allgemeinen ist dies jedoch nicht der Fall, so dass der Nullpunktwert SWA_CENTER_LEVEL0 einen Offsetfehler aufweist, welcher dem Winkelbetrag entspricht, um den das Lenkrad gedreht worden ist, während die Zündung abgeschaltet war. Der Nullpunktwert SWA_CENTER_LEVEL0 wird daher nur intern als Startwert verwendet und für Plausibilitätsprüfungen der in den Detektionsmodulen 17, 18, 19 ermittelten Nullpunktwerte herangezogen.

Kurvenfahrt (Stufe 1)

Das Detektionsmodul 17 ist so ausgebildet, dass es Nullpunktwerte während einer Kurvenfahrt ermittelt. Es ist jedoch auch bei Geradeausfahrt aktiv, weil im Zusammenhang mit der Erfindung die Geradeausfahrt nur als ein Spezialfall der Kurvenfahrt angesehen wird. Dem Detektionsmodul 17 wird die Rangstufe 1 zugeordnet. Es liefert typischerweise die ersten Ergebnisse für die Geradeausstellung.

Das Detektionsmodul 17 ist aktiv, wenn die folgenden Bedingungen erfüllt sind:

- Gierrate und Seitenbeschleunigungssignale stehen zur Verfügung und sind eingeschwungen;
- das Fahrdynamikregelsystem führt keinen Bremseneingriff zur Beeinflussung des Fahrverhaltens durch;
- der berechnete Lenkwinkel liegt innerhalb möglicher Grenzen;
- das Fahrzeug bewegt sich nicht rückwärts;
- eine bereits detektierte Vorwärtsfahrt ist nicht unterbrochen worden;
- das Fahrzeug ist nicht instabil;
- die Hilfssensorsignale, d. h. Gierrate, Seitenbeschleunigung und Radgeschwindigkeiten, stehen zur Verfügung;
- die Detektion in dem Detektionsmodul 17 ist noch nicht abgeschlossen worden.

Die Eingangsbedingungen werden anhand der in Figur 2 dargestellten Eingangssignale und anhand weiterer in Figur 2 nicht dargestellter Eingangssignale des Detektionsmodul 17 geprüft.

Das Detektionsmodul 17 ist unter den genannten Bedingungen solange aktiv, bis entweder das Detektionsmodul 18 oder das Detektionsmodul 19 einen Nullpunktwert in der Qualitätsstufe "hoch" ermittelt hat oder das Detektionsmodul 17 selbst ein Ergebnis mit der Qualitätsstufe "hoch" ermittelt hat und die zur Verfügung stehende Anzahl von Samples einer Ermittlungsdauer von 60 Sekunden entspricht. Wenn nach der Aktivierung kein gültiger Nullpunktwert SWA_CENTER_LEVEL1 in dem Detektionsmodul 17 gefunden oder ausgegeben wurde, bevor eine Rückwärtsfahrt oder eine Fahrzeuggeschwindigkeit, die geringer als die zuvor genannte Eintrittsschwelle ist, festgestellt worden ist, dann werden alle zuvor erfassten Samples verworfen. In diesem Fall wird das Detektionsmodul 17 erneut gestartet, wenn die oben genannten Eingangsbedingungen wieder erfüllt sind.

In dem Detektionsmodul 17 wird unter Annahme stationärer Bedingungen anhand eines Fahrzeugmodells ein Lenkwinkel berechnet. In einer Ausführungsform wird ein lineares Einspurmodell des Fahrzeugs zugrunde gelegt, in dem der Lenkwinkel $\delta$ an den Rädern durch

$$\delta = \frac{l \cdot \dot{\psi}}{v} + a_y \cdot EG \qquad (1)$$

berechnet wird. Hierbei ist $l$ der Radstand des Fahrzeugs, $\dot{\psi}$ die gemessene Gierrate, $v$ die etwa aus den Signalen der Raddrehzahlsensoren ermittelte Fahrzeuggeschwindigkeit, $a_y$ die mittels eines Sensors gemessene Querbeschleunigung (im Schwerpunktsystems des Fahrzeugs) und EG der Eigenlenkgradient des Fahrzeugs. Der anhand von Gleichung 1 berechnete Lenkwinkel an den lenkbaren Fahrzeugrädern 7, 8 kann nach Maßgabe der (momentanen) Lenkübersetzung in den Lenkradwinkel umgerechnet werden. Ferner kann anhand eines aus der Lenkwinkeländerungsrate berechneten Korrekturfaktors berücksichtigt werden, dass Gierrate und Querbeschleunigung dem eingestellten Lenkwinkel mit einer Phasenverzögerung folgen. Der somit bestimmte Lenkradwinkel wird im Folgenden auch als berechneter Lenkwinkel bezeichnet.

Bekanntermaßen wird in Fahrdynamikregelsystem eine Soll-Gierrate in Abhängigkeit von dem Lenkwinkel bestimmt. Eine weitere Möglichkeit zur Ermittlung des vorliegenden Lenkwinkels besteht damit darin, den Lenkwinkel schrittweise zu verändern, bis sich die berechnete Soll-Gierrate möglichst gut an die gemessene Gierrate angenähert hat. Der somit bestimmte Lenkradwinkel kann alternativ zu dem berechneten Lenkwinkel verwendet werden.

Der Nullpunktwert ergibt sich in dem Detektionsmodul 17 aus der Differenz zwischen dem unzentrierten Lenkwinkel und dem berechneten Lenkwinkel. In jedem Loop wird ein einzelner derartiger Nullpunktwert berechnet, wenn die zuvor beschriebenen Bedingungen und die nachfolgen genannten Bedingungen erfüllt sind. Ein in einem Loop ermittelter Nullpunktwert wird im Folgenden als Sample bezeichnet.

Die Qualitätsstufe in dem Detektionsmodul 17 sowie in den Detektionsmodulen 18, 19 kann in einer Ausführungsform der Erfindung einen der drei Werte "niedrig", "mittel" und "hoch" annehmen oder es wird keine Qualitätsstufe festgelegt. In dem Detektionsmodul 17 wird die Qualitätsstufe QR_LEVEL1 auf "niedrig" gesetzt, wenn weniger als drei Samples vorliegen. Die Qualitätsstufe QR_LEVEL1 wird auf "mittel" gesetzt, wenn wenigstens drei Nullpunktwerte vorliegen und wenigstens ein Situationsbewertungsflag gesetzt ist. Die Qualitätsstufe QR_LEVEL1 = Hoch liegt dann vor, wenn wenigstens drei Nullpunktwerte vorliegen und kein Situationsbewertungsflag gesetzt ist. Die Qualitätsstufe QR_LEVEL1 wird bei jeder Erfassung eines Samples aktualisiert, sofern die Anzahl der Samples drei erreicht bzw. ein Situationsbewertungsflag verändert wird.

Solange in dem Detektionsmodul 17 weniger als drei Samples ermittelt wurden, d.h. die Qualitätsstufe niedrig vorliegt, werden die Samples unabhängig von den Fahrbedingungen in einem Speicher addiert und die Anzahl der Samples wird mittels eines Zählers erfasst. Sobald wenigstens die Qualitätsstufe "mittel" vorliegt, werden weitere Samples nur dann in dem Speicher addiert, wenn sich die Fahrbedingungen nicht verschlechtert haben, d.h. in einem Loop kein zusätzliches Situationsbewertungsflag gesetzt wird. Wenn sich die Fahrbedingungen verbessern, d.h. wenn ein oder mehrere Situationsbewertungsflag zurückgesetzt werden, wird ferner der Mittelwert der bislang vorliegenden Samples ermittelt, indem der Speicherwert durch den Zählerwert geteilt wird. Der Speicher wird dann mit diesem Mittelwert überschrieben und der Zähler wird auf 1 gesetzt. Damit wird der Mittelwert im Folgenden als ein Sample angesehen; die zuvor ermittelten Samples werden nicht mehr berücksichtigt. Der Algorithmus wird dann in der beschriebenen Weise fortgesetzt, d.h. weitere Samples werden in dem Speicher addiert und der Zähler wird bei jeder Addition inkrementiert, bis sich die Fahrbedingungen erneut verbessern oder die Bestimmung des Nullpunktwerts in dem Detektionsmodul 17 abgeschlossen wird.

Ein derartiger Algorithmus stellt sicher, dass bei Verbesserung der Fahrbedingungen immer nur zwei "Samples" vorliegen: Das aktuelle Sample, von dem angenommen wird, dass es genauer ist, und der Mittelwert der vorherigen Samples. Hinter diesem Ansatz steht die Absicht, dass alle Samples, die unter schlechteren Bedingungen aufgenommen wurden, die Bestimmung des Nullpunktwerts unterstützen sollen, wenn sich die Bedingungen gerade eben erst verbessert haben. Aber sie sollen ihre Bedeutung sehr rasch verlieren, wenn weitere Messwerte unter günstigen Bedingungen erfasst werden.

In jedem Loop oder nach jeder Erfassung eines Samples ermittelt das Detektionsmodul 17 einen Nullpunktwert SWA_CENTER_LEVEL1, indem der dann vorliegende Speicherwert durch den dann vorliegenden Zählerwert geteilt wird, und übermittelt diesen Wert zusammen mit der zugehörigen Qualitätsstufe QR_LEVEL1 sowie der zugehörigen Lenkwinkelunsicherheit SWA_UNCERTAINTY_LEVEL1 an die Arbitrierungseinrichtung 20.

Die einem Nullpunktwert SWA_CENTER_LEVEL3 zugeordnete Qualitätsstufe QR_LEVEL3 entspricht der Qualitätsstufe, die bei Erfassung des letzten Samples vorlag, das zur Bestimmung des Nullpunktwerts SWA_CENTER_LEVEL3 herangezogen wird.

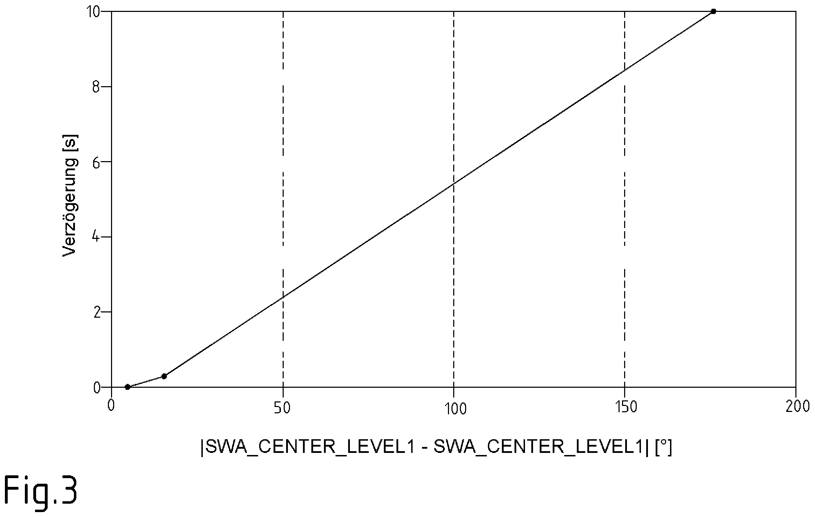

Abhängig von der Fahrsituation kann der in dem Detektionsmodul 17 Nullpunktwert jedoch ungenau sein, wenn nur wenige Samples erfasst worden sind. Um eine fehlerhafte Bestimmung des Nullpunktwerts zu vermeiden, wird ein in dem Detektionsmodul 17 ermittelter Nullpunktwert SWA_CENTER_LEVEL1 daher mit dem in dem Detektionsmodul 16 ermittelten Nullpunktwert SWA_CENTER_LEVEL0 verglichen. Abhängig von der Differenz dieser beiden Werte wird dem Ergebnis des Detektionsmoduls 17 erst mit einer bestimmten Verzögerung vertraut. Hierzu wird der Differenz eine Verzögerung zugeordnet, was beispielsweise anhand der in Figur 3 dargestellten Kennlinie erfolgen kann. Solange die der Anzahl von erfassten Samples entsprechende Zeitdauer kleiner als diese Verzögerung ist, wird die Qualitätsstufe QR_LEVEL1 beschränkt. Wenn der Nullpunktwert SWA_CENTER_LEVEL1 bereits gültig ist, d.h. von der Arbitrierungseinrichtung 20 zur Bestimmung des Nullpunktwerts SWA_CENTER herangezogen wird, dann wird die Qualitätsstufe QR_LEVEL1 auf höchstens "mittel" begrenzt. Wenn das Ergebnis noch nicht gültig ist, aber die Fahrtrichtung als "vorwärts" bestätigt wird, wird die Qualitätsstufe QR_LEVEL1 um eine Stufe gegenüber der in der zuvor beschriebenen Weise ermittelten Stufe vermindert. Wenn zusätzlich die Vorwärtsfahrt noch nicht bestätigt worden ist, wird das Ergebnis vollständig verworfen, d. h. dem Ergebnis wird keine Qualitätsstufe zugeordnet.

Eine nicht festgestellte Rückwärtsfahrt ist für die Bestimmung des Nullpunktwerts in dem Detektionsmodul 17 deshalb kritisch, weil in diesem Fall die Gierrate ein umgekehrtes Vorzeichen hat und die Gleichung 1 nicht mehr korrekt ist. Folglich könnte der resultierende Fehler sehr groß werden. Deshalb beinhaltet das Detektionsmodul 17 vorzugsweise zusätzlich einen Überwachungsmechanismus, der in der folgenden Weise funktioniert: Solange keine Vorwärtsfahrtrichtung bestätigt worden ist, wird ein Flag gesetzt. Dieses Flag wird nur dann zurückgesetzt, wenn eine Rückwärts- oder Vorwärtsfahrt festgestellt wird. Im Falle einer Vorwärtsfahrt besteht kein Bedarf für besondere Maßnahmen. Aber wenn eine Rückwärtsfahrt festgestellt wird, werden alle zur Verfügung stehenden Samples auf eine vorgegebene, minimale erlaubte Anzahl reduziert. Dies geschieht dadurch, dass der Mittelwert der vorliegenden Samples gebildet und mit der minimal erlaubten Anzahl multipliziert wird. Der im Speicher vorliegende Wert wird dann mit dem Ergebnis der Multiplikation überschrieben und der Zählerwert wird auf die minimal erlaubte Anzahl gesetzt. Dann wird die Detektion unterbrochen und mit diesen Speicher- und Zählerwerten wieder neu begonnen, wenn die Eingangsbedingungen wieder erfüllt sind. Diese Verringerung der Anzahl an Samples soll auf der einen Seite den negativen Einfluss der Rückwärtsfahrt begrenzen. Auf der anderen Seite soll dieses Ergebnis nicht vollständig verworfen werden.

Die Lenkwinkelunsicherheit eines in dem Detektionsmodul 17 ermittelten Samples wird in der folgenden Weise bestimmt. Eine erste Abschätzung für die Unsicherheit liefert die Abweichung des Samples von dem anhand der vorherigen Samples ermittelten Nullpunktwert SWA_CENTER_LEVEL1. Ferner liefern Samples, die erhalten werden, während das Lenkrad schnell gedreht wird, in der Regel weniger genaue Ergebnisse. Der zuvor erwähnte Korrekturfaktor, der in den berechneten Lenkwinkel eingeht, bietet aus diesem Grund eine zweite Abschätzung für die momentane Lenkwinkelunsicherheit. Da der Einfluss auf die festgestellte Geradeausstellung mit zunehmender Anzahl von Samples abnimmt, wird dieser Korrekturfaktor durch die Anzahl der Samples geteilt, um eine zweite Abschätzung für die Lenkwinkelunsicherheit zu erhalten. Durch das Maximum der ersten und der zweiten Abschätzung wird die Unsicherheit des Samples ermittelt. Die Lenkwinkelunsicherheit SWA_UNCERTAINTY_LEVEL1 eines in dem Detektionsmodul 17 ermittelten Nullpunktwerts SWA_CENTER_LEVEL1 ergibt sich als Mittelwert der Unsicherheiten der einzelnen Samples, die zur Bestimmung des Nullpunktwerts SWA_CENTER_LEVEL1 herangezogen worden sind. Um den negativen Einfluss der Fahrbedingungen widerzuspiegeln, wird der Mittelwert zudem mit einem Korrekturfaktor angepasst, der von der Qualitätsstufe QR_LEVEL1 abhängt. Bei einer Qualitätsstufe QR_LEVEL1 = hoch nimmt er beispielsweise den Wert 1,0 an, bei einer Qualitätsstufe QR_LEVEL1 = mittel den Wert 1,75 und bei Qualitätsstufe QR_LEVEL1 = niedrig den Wert 2,5.

Wenn die ersten Samples zufälligerweise sehr ähnliche Werte ergaben und die Änderung des Lenkwinkels gering ist, kann die Lenkwinkelunsicherheit SWA_UNCERTAINTY_LEVEL1 einen zu kleinen Wert ergeben. Daher ist die Lenkwinkelunsicherheit SWA_UNCERTAINTY_LEVEL1 auf einen minimalen Wert begrenzt, der beispielsweise bei 0,5 Grad liegt, wenn nur die minimal erlaubte Anzahl von Messwerten aufgenommen worden ist und mit Erfassung der nächsten 20 Samples linear auf den Wert null sinkt.

Slalom- oder Schlechtwegefahrten (Stufe 2)

Das Detektionsmodul 18 ist ausgelegt, um die Geradeausstellung des Lenkwinkels aus Nulldurchgängen der Gierrate festzustellen, wie sie auf schlechten Straßen oder beim Fahren von Slalom aufgrund von Lenkbewegungen des Fahrers auftreten. Hierbei wird davon ausgegangen, dass der bei einem derartigen Nulldurchgang vorliegende sogenannte dynamische Lenkwinkel der Geradeausstellung des Lenkrads entspricht. Der dynamische Lenkwinkel ergibt sich durch eine Filterung des unzentrierten Lenkwinkels. Durch geeignete Auslegung und Anwendung eines Tiefpaß-Filters wird hierbei die verzögerte Reaktion des Fahrzeugs auf Lenkbewegungen ausgeglichen. Dem Detektionsmodul 18 ist die Rangstufe 2 zugeordnet. Es kann schnell Ergebnisse für den Nullpunktwert liefern, aber die Detektion ist auf bestimmte Fahrsituationen beschränkt.

Das Detektionsmodul 18 ist aktiv, wenn die folgenden Bedingungen erfüllt sind:

- Gierrate und Seitenbeschleunigungssignale stehen zur Verfügung und sind eingeschwungen;
- die Fahrzeuggeschwindigkeit ist größer als 5 km/h;
- es wird keine Rückwärtsbewegung festgestellt;
- das Fahrzeug ist nicht instabil;
- Sensorsignale für Gierrate, Seitenbeschleunigung und Radgeschwindigkeiten stehen zur Verfügung;
- die Detektion in Stufe 2 ist noch nicht abgeschlossen worden.

Die Eingangsbedingungen werden anhand der in Figur 2 dargestellten Eingangssignale und anhand weiterer in Figur 2 nicht dargestellter Eingangssignale des Detektionsmodul 18 geprüft.

Das Detektionsmodul 18 bleibt unter den genannten Bedingungen solange aktiv, bis das Detektionsmodul 19 einen Nullpunktwert mit der Qualitätsstufe QR_LEVEL3 = hoch festgestellt hat oder bis das Detektionsmodul 18 selbst einen Nullpunktwert mit der Qualitätsstufe QR_LEVEL2 = hoch bestimmt hat und wenigstens 20 Samples aufgenommen wurden. Wenn nach der Aktivierung kein gültiger Nullpunktwert SWA_CENTER_LEVEL2 in dem Detektionsmodul 18 gefunden oder ausgegeben wurde, bevor eine Rückwärtsfahrt oder eine Fahrzeuggeschwindigkeit, die geringer als die zuvor genannte Eintrittsschwelle ist, festgestellt worden ist, werden alle zuvor erfassten Samples verworfen. In diesem Fall wird das Detektionsmodul 18 erneut gestartet, wenn die oben genannten Eingangsbedingungen wieder erfüllt sind.

Wie bereits erwähnt, entspricht der bei einem Nulldurchgang der Gierrate vorliegende Wert des dynamischen Lenkwinkels zumindest näherungsweise der Geradeausstellung des Lenkrads. Bei jedem Nulldurchgang des Gierratensignals ergibt sich ein Sample, sofern die zur Erfassung der Samples vorgegebenen Bedingungen erfüllt sind. Um eine Mehrfachdetektion bei einem einzigen tatsächlichen Nulldurchgang zu vermeiden, wird eine Verzögerung von beispielsweise 0,2 Sekunden zwischen der Erfassung von Messungen vorgesehen. Darüber hinaus muss die Richtung des Nulldurchganges für zwei aufeinander folgende Samples unterschiedlich sein.

Ganz entsprechend zu dem, was für Detektionsmodul 17 beschrieben worden ist, werden die ersten beiden Samples unabhängig von den Fahrbedingungen in einem Speicher addiert und die Anzahl der Samples wird mittels eines Zählers erfasst. Liegen bereits zwei Samples vor, werden weitere Samples nur dann in dem Speicher addiert, wenn sich die Fahrbedingungen nicht verschlechtern, d.h. keine zusätzlichen Situationsbewertungsflag gesetzt werden. Wenn sich die Fahrbedingungen verbessern, d.h. wenn ein oder mehrere Situationsbewertungsflags zurückgesetzt werden, wird ferner der Mittelwert der bislang Samples ermittelt, in dem der Speicherwert durch den Zählerwert geteilt wird. Der Speicher wird dann mit diesem Mittelwert überschrieben und der Zähler wird auf 1 gesetzt. Der Algorithmus wird dann in der beschriebenen Weise fortgesetzt, d.h. weitere Samples werden in dem Speicher addiert und der Zähler wird bei jeder Addition inkrementiert bis sich die Fahrbedingungen erneut verbessern oder die Bestimmung des Nullpunktwerts in dem Detektionsmodul 17 abgeschlossen wird.

In jedem Loop oder nach jeder Erfassung eines Samples ermittelt das Detektionsmodul 18 einen Nullpunktwert SWA_CENTER_LEVEL2, indem der dann vorliegende Speicherwert durch den dann vorliegenden Zählerwert geteilt wird. Die Nullpunktwerte SWA_CENTER_LEVEL2 werden zusammen mit der zugehörigen Qualitätsstufe QR_LEVEL2 sowie der zugehörigen Lenkwinkelunsicherheit SWA_UNCERTAINTY_LEVEL2 an die Arbitrierungseinrichtung 20 übermittelt.

Die Qualitätsstufe QR_LEVEL2 für das Detektionsmodul 18 hängt wie für alle anderen Detektionsmodule von den Bedingungen ab, unter denen die Samples erfasst worden sind. Für eine Qualitätseinstufung, die besser als "niedrig" ist, sind wenigstens zwei Samples notwendig. Um die Qualitätsstufe QR_LEVEL2 = hoch zu erreichen, müssen wenigstens acht Samples erfasst worden sein und es darf kein Situationsbewertungsflag gesetzt sein. Die Stufen "mittel" und "niedrig" können beispielsweise anhand der folgenden Tabelle gesetzt werden. In der Tabelle bedeutet "wahr", dass das entsprechende Flag gesetzt ist, "falsch", dass es nicht gesetzt ist, und "-", dass es irrelevant ist, ob es gesetzt ist oder nicht.

| Fahrgeschwindigkeit klein | Fahrbahn geneigt | Bremseingriff | Motoreingriff | QR_LEVEL2 |
|---|---|---|---|---|
| - | - | wahr | - | niedrig |
| wahr | wahr | - | - | |

(fortgesetzt)

| Fahrgeschwindigkeit klein | Fahrbahn geneigt | Bremseingriff | Motoreingriff | QR_LEVEL2 |
|---|---|---|---|---|
| wahr | falsch | falsch | - | |
| falsch | wahr | falsch | - | mittel |
| falsch | falsch | falsch | wahr | |

Entsprechend diesen Vorschriften wird die Qualitätsstufe QR_LEVEL2 bei jeder Erfassung eines Samples aktualisiert, wenn dies erforderlich ist. Die einem Nullpunktwert SWA_CENTER_LEVEL2 zugeordnete Qualitätsstufe QR_LEVEL2 entspricht der Qualitätsstufe, die bei Erfassung des letzten Samples vorlag, das zur Bestimmung des Nullpunktwerts SWA_CENTER_LEVEL2 herangezogen wird.

Die Lenkwinkelunsicherheit eines Samples wird in dem Detektionsmodul 18 in ähnlicher Weise bestimmt wie in dem Detektionsmodul 17. Eine erste Abschätzung für die Lenkwinkelunsicherheit eines Samples ergibt sich wiederum aus der Abweichung des Samples von dem anhand der vorherigen Samples ermittelten Nullpunktwert. Da die Ergebnisse bei sehr dynamischen Fahrmanövern ungenauer werden, kann die Differenz zwischen unzentriertem Lenkwinkel und dynamischem Lenkwinkel als zweite Abschätzung für die Unsicherheit benutzt werden. Das Vertrauen in die berechnete Geradeausstellung nimmt mit weitergehender Detektion zu. Deshalb wird dieser Wert für die Lenkwinkelunsicherheit durch die Anzahl der Samples geteilt. Eine Begrenzung der Lenkwinkelunsicherheit hat sich nicht als notwendig erwiesen. Die Lenkwinkelunsicherheit SWA_UNCERTAINTY_LEVEL2 eines Nullpunktwerts SWA_CENTER_LEVEL2 ergibt sich aus dem Mittelwert der Unsicherheiten der zur Bestimmung des Nullpunktwerts SWA_CENTER_LEVEL2 herangezogenen Samples, korrigiert anhand eines Korrekturfaktors. Bei einer Qualitätsstufe QR_LEVEL2 = hoch nimmt der Korrekturfaktor beispielsweise den Wert 1,0 an, bei einer Qualitätsstufe QR_LEVEL2 = mittel den Wert 1,5 und bei Qualitätsstufe QR_LEVEL2 = niedrig den Wert 2,0.

Geradeausfahrt (Stufe 3)

Das Detektionsmodul 19 ist eingerichtet, um den Nullpunktwert während der Geradeausfahrt zu bestimmen. Dabei entspricht der unzentrierte Lenkwinkel während einer festgestellten Geradeausfahrt der Geradeausstellung des Lenkrads. Dem Detektionsmodul 19 wird die Rangstufe 3 zugeordnet. Typischerweise ist die Detektion nicht so schnell, wie in den Detektionsmodulen der niedrigeren Stufen; das Detektionsmodul 19 erzeugt jedoch genauste Ergebnisse für den Nullpunktwert.

Das Detektionsmodul 19 ist aktiv, wenn die folgenden Bedingungen erfüllt sind:

- Gierrate und Seitenbeschleunigungssignale stehen zur Verfügung und sind eingeschwungen;
- die Fahrzeuggeschwindigkeit ist größer als 5 km/h;
- das Fahrzeug ist nicht instabil;
- für die Gierrate, Seitenbeschleunigung und Radgeschwindigkeiten stehen Sensorsignale zur Verfügung;
- die Detektion in Stufe 3 ist noch nicht abgeschlossen.

Das Detektionsmodul 19 ist, unter diesen Bedingungen solange aktiv, bis sie wenigstens 20 Observationszyklen mit der Qualitätsstufe QR_LEVEL3 = hoch durchlaufen worden sind. Darüber hinaus muss ein in dem Detektionsmodul 19 ermittelter Nullpunktwert SWA_CENTER_LEVEL3 eine Unsicherheit von weniger als beispielsweise 0,033° haben. Wenn nach der Aktivierung kein gültiger Nullpunktwert SWA_CENTER_LEVEL3 in dem Detektionsmodul 19 gefunden oder ausgegeben wurde, bevor eine Fahrzeuggeschwindigkeit, die geringer als die zuvor genannte Eintrittsschwelle ist, festgestellt worden ist, werden alle zuvor erfassten Samples verworfen. In diesem Fall wird das Detektionsmodul 19 erneut gestartet, wenn die oben genannten Eingangsbedingungen wieder erfüllt sind.

Wie bereits erwähnt, entspricht der unzentrierte Lenkwinkel während einer festgestellten Geradeausfahrt dem Nullpunktwert. Um die Geradeausfahrt festzustellen, ist es notwendig, dass die Gierrate und die Gierbeschleunigung während eines Observationszyklus innerhalb vorgegebener Grenzwerte bleiben. Zusätzlich darf sich der unzentrierte Lenkwinkel nicht wesentlich verändern. Insbesondere darf die Änderung des unzentrierten Lenkwinkels einen bestimmten Schwellenwert nicht überschreiten.

Für den ersten Observationszyklus sind die Grenzwerte für die Gierrate und die Gierbeschleunigung in einem Ausführungsbeispiel mit 3°/s und 9,6°/s$^2$ vorgegeben. Wenn ein Observationszyklus erfolgreich abgeschlossen worden ist, werden die Grenzwerte für den nächsten Observationszyklus auf diejenigen Maximalwerte der Gierrate und der Gierbeschleunigung reduziert, die in dem vorherigen Zyklus beobachtet worden sind. Auf diese Weise werden die Grenzwerte kleiner, und die Genauigkeit der Nullpunktwerte SWA_CENTER_LEVEL3 wird mit jedem neuen Beobachtungszyklus besser. Um zu verhindern, dass der Algorithmus nicht fortgeführt werden kann, weil die Maximalwerte in einem Observationszyklus zufällig sehr klein waren, werden die Grenzwerte auf ein Minimum von 0,6°/s und 2,4°/s$^2$ begrenzt.

Der Grenzwert für die zugelassenen Lenkänderungen wird abgeleitet von dem momentanen Grenzwert der Gierrate mit einem Teiler von 0,5/s. D. h., wenn zum Beispiel die Gierratengrenze 1,5°/s ist, sind Lenkwinkeländerungen von Maximal 3 Grad erlaubt. Diese Grenze ist auf ein Minimum beschränkt, welches der Sensorauflösung entspricht. Beispielsweise kann für physikalische Sensorauflösungen, die größer als 1,5 Grad sind, der Teiler auf 0,3 pro Sekunde verringert werden.

Die Dauer eines Observationszyklus hängt im Wesentlichen von der Fahrzeuggeschwindigkeit ab. Bei niedrigen Fahrzeuggeschwindigkeiten werden längere Observationszyklen benötigt. In einer Ausführungsform hat ein Observationszyklus bei 5 km/h eine Dauer von 2,5 Sekunden; mit zunehmender Fahrzeuggeschwindigkeit nimmt die Dauer linear auf 0,75 Sekunden bei 60 km/h ab und beträgt auch bei weiter zunehmender Geschwindigkeit 0,75 Sekunden.

Wenn das Fahrzeug auf einer geneigten Straße geradeaus fährt, muss der Fahrer zu der höheren Seite der Straße lenken, um geradeaus zu fahren. Normalerweise kann das Lenkrad in einer solchen Fahrsituation nicht während einer längeren Zeitdauer stillgehalten werden. Um fehlerhafte Ergebnisse zu vermeiden wird die Beobachtungszeit daher mit einem Korrekturfaktor multipliziert, der von dem Neigungswinkel des Fahrzeugs abhängt und von 1,0 für 0 Grad bis 4 für 45 Grad Neigungswinkel zunimmt. Ändert sich der Neigungswinkel während eines Observationszyklus, wird zur Bestimmung seiner Dauer das Maximum der ermittelten Werte herangezogen.

Wenn die Gierrate oder die Gierbeschleunigung den entsprechenden für einen Observationszyklus vorgegebenen Grenzwert überschreitet, wird der Observationszyklus abgebrochen und ein neuer Observationszyklus gestartet.

Insbesondere während der ersten Observationszyklen mit hohen Grenzwerten können die Gierrate und die Gierbeschleunigung unterhalb ihrer Grenzwerte bleiben, obwohl das Fahrzeug tatsächlich in einer konstanten Kurve mit einem großen Radius fährt. Um in einem solchen Fall Fehldetektionen zu vermeiden, wird zusätzlich gefordert, dass sich das Vorzeichen der Gierrate während eines Observationszyklus ändert. Insbesondere wird der aktive Observationszyklus abgebrochen, wenn das Vorzeichen der Gierrate für wenigstens 75% der Observationsdauer konstant ist.

Während eines aktiven Observationszyklus wird einmal pro Loop der unzentrierte Lenkwinkel als ein Sample erfasst. Die erfassten Samples werden in einem Speicher aufaddiert und für jedes erfasste Sample wird ein Zähler inkrementiert. Wenn ein Observationszyklus erfolgreich abgeschlossen wird (d.h. nicht abgebrochen wird), wird ein Zwischen-Nullpunktwert als Mittelwert der in dem Observationszyklus erfassten Samples bestimmt, indem der Speicherwert durch den Zählerwert geteilt wird. Dann werden Speicher und Zähler für den nächsten Observationszyklus auf den Wert Null zurückgesetzt. Ferner werden Speicher und Zähler auch dann zurückgesetzt, wenn ein Observationszyklus abgebrochen worden ist.

Der Zwischen-Nullpunktwert des ersten Observationszyklus nach der Aktivierung des Detektionsmoduls 19 oder nach einer Verbesserung der Fahrbedingungen, d.h. nach dem Zurücksetzen eines Situationsbewertungsflags wird als Nullpunktwert SWA_CENTER_LEVEL3 übernommen. Für einen nachfolgenden Observationszyklus wird der Nullpunktwert SWA_CENTER_LEVEL3 berechnet, in den zu 70% des Zwischen-Nullpunktwerts dieses Observationszyklus und zu 30% des Zwischen-Nullpunktwerts des vorangegangenen Observationszyklus einfließt. Die in dieser Weise ermittelten Werte SWA_CENTER_LEVEL3 werden zusammen mit der zugehörigen Qualitätsstufe QR_LEVEL3 sowie der zugehörigen Lenkwinkelunsicherheit SWA_UNCERTAINTY_LEVEL3 an die Arbitrierungseinrichtung 20 übermittelt.

Der erste Observationszyklus wird nach der Aktivierung des Detektionsmoduls 19 gestartet. Entsprechend zu dem, was für die Detektionsmodule 17, 18 beschrieben worden ist, wird ein weiterer Observationszyklus nur dann gestartet, wenn sich die Fahrbedingungen nicht verschlechtern, d.h. wenn kein zusätzliches Situationsbewertungsflag gesetzt wird. Wenn sich die Fahrbedingungen während eines Observationszyklus verschlechtern, wird der aktive Observationszyklus unterbrochen, bis die Fahrbedingungen wieder das vorherige Niveau erreichen. Verbessern sich die Fahrbedingungen während eines Observationszyklus über das zu Beginn des Observationszyklus hinausgehende Niveau, wird der Observationszyklus abgebrochen und ein neuer Observationszyklus gestartet. Die Grenzwerte für die Gierrate und die Gierbeschleunigung werden in diesem Fall auf Ausgangswerte zurückgesetzt.

Die Qualitätsstufe QR_LEVEL3 wird in dem Detektionsmodul 19 auf "hoch" gesetzt, wenn kein Situationsbewertungsflag gesetzt ist. Die Stufen "mittel" und "niedrig" können beispielsweise anhand der im Zusammenhang mit dem Detektionsmodul 18 angegebenen Tabelle festgelegt werden. Bei jeder Erfassung eines Samples wird die Qualitätsstufe falls erforderlich aktualisiert. Die einem Nullpunktwert SWA_CENTER_LEVEL3 zugeordnete Qualitätsstufe QR_LEVEL3 entspricht der Qualitätsstufe, die bei Erfassung des letzten Observationszyklus vorlag, der zur Bestimmung des Nullpunktwerts SWA_CENTER_LEVEL3 herangezogen wird.

Die Lenkwinkelunsicherheit SWA_UNCERTAINTY_LEVEL3 eines Nullpunktwerts SWA_CENTER_LEVEL 3 wird in dem Detektionsmodul 19 aus der maximalen Gierrate abgeleitet, die während des Observationszyklus beobachtet wurde, in dem der Nullpunktwert bestimmt worden ist. Unter der Annahme von stationären Bedingungen kann die Lenkwinkelunsicherheit durch

$$\left(\frac{l}{v} + EG \cdot v\right) \cdot \delta\psi$$

abgeschätzt werden, wobei der Gierratenfehler $\delta\psi$ sich aus der Differenz zwischen der maximalen Gierrate des genannten Observationszyklus und dem zuvor beschriebenen Minimum der Gierratengrenze ergibt. Um zu verhindern, dass bei niedrigen Fahrgeschwindigkeiten die Lenkwinkelunsicherheit große Werte annimmt, wird die Fahrzeuggeschwindigkeit bei der Berechnung des Lenkwinkels auf beispielsweise 10 km/h nach unten begrenzt. Die Lenkwinkelunsicherheit wird hier so berechnet, dass sie für die auf den ersten Observationszyklus folgenden Zyklus konstant bleibt oder abnimmt. Wie bei den anderen Stufen wird die Unsicherheit gemäß einer Qualitätsstufe durch einen in Figur Korrekturfaktor angepasst. Bei einer Qualitätsstufe QR_LEVEL3 = hoch nimmt der Korrekturfaktor beispielsweise den Wert 1,0 an, bei einer Qualitätsstufe QR_LEVEL2 = mittel den Wert 1,25 und bei Qualitätsstufe QR_LEVEL3 = niedrig den Wert 1,5.

Sobald ein Nullpunktwert SWA_CENTER_LEVEL1, SWA_CENTER_LEVEL2 oder SWA_CENTER_LEVEL3 in einem Detektionsmodul 17, 18, bzw. 19 ermittelt worden ist, wird dieser zusammen mit der zugehörigen Qualitätsstufe QR_LEVEL1, QR_LEVEL2 bzw. QR_LEVEL3 sowie der zugehörigen Lenkwinkelunsicherheit SWA_UNCERTAINTY_LEVEL1, SWA_UNCERTAINTY_LEVEL2 bzw. SWA_UNCERTAINTY_LEVEL3 an die Arbitrierungseinrichtung 20 übermittelt.

In der Arbitrierungseinrichtung 20 wird aus den vorliegenden Nullpunktwerten SWA_CENTER_LEVEL1, SWA_CENTER_LEVEL2, und SWA_CENTER_-LEVEL3 der gültige Nullpunktwert SWA_CENTER ermittelt, der zur Verwendung in weiteren Fahrzeugsystemen herangezogen werden soll.

Grundsätzlich ist in einer Ausführungsform vorgesehen, dass als gültiger Nullpunktwert SWA_CENTER der Nullpunktwert mit der höchsten Qualitätsstufe verwendet wird. Wenn in zwei oder mehr Detektionsmodulen ermittelte Nullpunktwerte die gleiche Qualitätsstufe aufweisen, dann wir der Nullpunktwert als gültiger Nullpunktwert SWA_CENTER gesetzt, der in dem Detektionsmodul mit der höchsten Rangstufe bestimmt worden ist. Wenn jedoch in einem Detektionsmodul mit einer höheren Rangstufe ein Nullpunktwert ermittelt worden ist, dessen Qualitätsstufe nur geringfügig schlechter ist, als die Qualitätsstufe eines Nullpunktwerts, der in einem Detektionsmodul einer kleineren Rangstufe ermittelt worden ist, wird der Mittelwert, der in diesen beiden Detektionsmodulen bestimmten Wert gebildet und als Wert des Nullpunkts SWA_CENTER verwendet. Bei der hier beispielhaft vorgesehenen Verwendung von drei Qualitätsstufen wird unter einer geringfügigen Abweichung eine Abweichung von einer Qualitätsstufe verstanden. Darüber hinaus kann es auch vorgesehen sein, dass als gültiger Nullpunktwert SWA_CENTER der Mittelwert der Nullpunktwerte festgelegt wird, die mit hoher Qualitätsstufe in zwei Detektionsmodulen mit geringerer Rangstufe ermittelt worden sind.

Unter Zugrundelegung der zuvor beschriebenen Detektionsmodule und Qualitätsstufen wird der gültige Nullpunktwert in einer Ausführungsform insbesondere anhand der folgenden Tabelle bestimmt. In der Tabelle bedeutet "-", dass die entsprechende Qualitätsstufe irrelevant ist. Ein Eintrag "Rangstufe X + Y" in der letzten Spalte bedeutet, dass als gültiger Nullpunktwert der Mittelwert der in den Detektionsmodulen der Rangstufen X und Y ermittelten Nullpunktwerte herangezogen wird.

| QR_LEVEL1 | QR_LEVEL2 | QR_LEVEL3 | SWA_CENTER |
|---|---|---|---|
| - | - | Hoch | Rangstufe 3 |
| ohne, mittel oder niedrig | ohne, mittel oder niedrig | mittel | |
| ohne oder niedrig | ohne oder niedrig | niedrig | |
| - | hoch | mittel | Rangstufen 2+ 3 |
| ohne, niedrig oder mittel | mittel | niedrig | |
| hoch | ohne, niedrig oder mittel | mittel | Rangstufen 1 + 3 |
| mittel | ohne oder niedrig | niedrig | |
| - | hoch | ohne oder niedrig | Rangstufe 2 |
| ohne, niedrig oder mittel | mittel | ohne | |
| hoch | mittel | ohne oder niedrig | Rangstufen 1 + 2 |
| mittel | niedrig | ohne | |

## EP 2 005 120 B1

(fortgesetzt)

| QR_LEVEL1 | QR_LEVEL2 | QR_LEVEL3 | SWA_CENTER |
|---|---|---|---|
| hoch | ohne oder niedrig | ohne oder niedrig | Rangstufe 1 |
| mittel | ohne | ohne | |

Der auf diese Weise ermittelte gültige Nullpunktwert SWA_CENTER wird verwendet, um den absoluten bzw. zentrierten Lenkwinkel zu bestimmen, der in weiteren Systemen des Fahrzeugs verwendet wird, insbesondere beispielsweise in einem oder mehreren Fahrdynamikregelsystemen. Der absolute Lenkwinkel ergibt sich dabei aus der Differenz des unzentrierten Lenkwinkels swa_uncentered und des gültigen Nullpunktwerts SWA_CENTER.

Darüber hinaus bestimmt die Arbitrierungseinrichtung die Unsicherheit des gültigen Nullpunktwerts SWA_CENTER. Falls nur einer der Zwischenwerte SWA_CENTER_LEVEL1, SWA_CENTER_LEVEL2, SWA_CENTER_LEVEL3 zur Bestimmung des Nullpunktwerts SWA_CENTER herangezogen wird, wird dessen Lenkwinkelunsicherheit für den Nullpunktwert SWA_CENTER übernommen. Falls mehrere der Zwischenwerte SWA_CENTER_LEVEL1, SWA_CENTER_LEVEL2, SWA_CENTER_LEVEL3 zur Bestimmung des Nullpunktwerts SWA_CENTER herangezogen werden, wird der Maximalwert der den herangezogenen Zwischenwerten zugeordneten Lenkwinkelunsicherheiten als Lenkwinkelunsicherheit des Nullpunktwerts SWA_CENTER übernommen.

Bei der Verwendung des absoluten Lenkwinkels in den Fahrzeugsystems wird vorteilhaft auch die Lenkwinkelunsicherheit mit in Betracht gezogen, wenn aus einem fehlerhaften absoluten Lenkwinkels eine Fehlfunktion des Systems resultieren kann. Handelt es sich bei dem System beispielsweise um ein Regelsystem, das aktiv wird, wenn einer der Lenkwinkel oder eine aus dem Lenkwinkel berechnete Größe einen vorgegebenen Schwellenwert über- oder unterschreitet, so kann der Schwellenwert anhand der Lenkwinkelunsicherheit bzw. einer aus der Lenkwinkelunsicherheit berechneten Größe angepasst werden. Hierdurch können bereits sehr früh Absolutwerte verwendet werden, die mit einer größeren Unsicherheit behaftet sind, ohne dass es zu Fehlfunktionen der Fahrzeugsysteme kommt.

Es versteht sich, dass die vorherige Beschreibung von Ausführungsbeispielen rein beispielhaft zu verstehen ist, und die Erfindung grundsätzlich auf andere Art ausgeführt werden kann. Insbesondere kann es beispielsweise vorgesehen sein, dass mehr als vier Detektionsmodule vorgesehen werden, so dass weitere Fahrsituationen abgedeckt werden können. Ferner können für eine feinere Bewertung der Zwischenwerte mehr als drei Qualitätsstufen verwendet werden.

Darüber hinaus ist die Erfindung nicht darauf beschränkt einen Nullpunktwert eines Lenkwinkels zu ermitteln, sondern kann in ähnlicher Weise auch für die Bestimmung von Nullpunktwerten oder Werten anderer definierter Bezugspunkte weiterer Größe herangezogen werden.

**Bezugszeichenliste**

1 Lenkanlage
2 Ritzel
3 Lenkwelle
4 Zahnstange
5 Spurstange
6 Spurstange
7 Rad
8 Rad
9 Lenkrad
11 Winkelgeber
12 Auswerteeinrichtung
16 Detektionsmodule der Rangstufe 0
17 Detektionsmodule der Rangstufe 1
18 Detektionsmodule der Rangstufe 2
19 Detektionsmodule der Rangstufe 3
20 Arbitrierungseinrichtung
21 Situationsbewertungseinrichtung

**Patentansprüche**

1. Verfahren zum Ermitteln eines Werts eines definierten ersten Bezugspunkts (SWA_CENTER) einer ersten Größe, die mittels eines inkremental messenden Sensors eines Kraftfahrzeugs gemessen wird, wobei

   - Zwischenwerte (SWA_CENTER_LEVEL1, SWA_CENTER_LEVEL2, SWA_CENTER_LEVEL3) des definierten Bezugspunkts (SWA_CENTER) in wenigstens zwei Detektionsmodulen (16, 17, 18, 19) unter Heranziehung wenigstens einer zweiten gemessenen Größe ermittelt werden, wobei jedes Detektionsmodul (16, 17, 18, 19) an die Bestimmung des Werts des definierten Bezugspunkts (SWA_CENTER) der ersten Größe in einer vorgegebenen Fahrsituation angepasst ist,
   - eine Qualitätsstufe (QR_LEVEL1, QR_LEVEL2, QR_LEVEL3) für jeden ermittelten Zwischenwert (SWA_CENTER_LEVEL1, SWA_CENTER_LEVEL2, SWA_CENTER_LEVEL3) bestimmt wird,
   - die Qualitätsstufen (QR_LEVEL1, QR_LEVEL2, QR_LEVEL3) der in verschiedenen Detektionsmodulen (16, 17, 18, 19) ermittelten Zwischenwerte (SWA_CENTER_LEVEL1, SWA_CENTER_LEVEL2, SWA_CENTER_LEVEL3) verglichen werden
   - der Wert des definierten Bezugspunkts (SWA_CENTER) aus den ermittelten Zwischenwerten (SWA_CENTER_LEVEL1, SWA_CENTER_LEVEL2, SWA_CENTER_LEVEL3) nach Maßgabe des Ergebnisses des Vergleichs der Qualitätsstufen (QR_LEVEL1, QR_LEVEL2, QR_LEVEL3) bestimmt wird
   - jedem Detektionsmodul (16, 17, 18, 19) eine Rangstufe entsprechend einer erwarteten Genauigkeit des in dem Detektionsmodul (16, 17, 18, 19) ermittelten Zwischenwerts (SWA_CENTER_LEVEL1, SWA_CENTER_LEVEL2, SWA_CENTER_LEVEL3) zugeordnet wird, und
   - als Wert des definierten Bezugspunkts (SWA_CENTER) der Zwischenwert (SWA_CENTER_LEVEL1, SWA_CENTER_LEVEL2, SWA_CENTER_LEVEL3) verwendet wird, welcher in dem Detektionsmodul (16, 17, 18, 19) mit höherer Rangstufe ermittelt worden ist, wenn in mehreren Detektionsmodulen (16, 17, 18, 19) ermittelte Zwischenwerte (SWA_CENTER_LEVEL1, SWA_CENTER_LEVEL2, SWA_CENTER_LEVEL3) übereinstimmende Qualitätsstufen (QR_LEVEL1, QR_LEVEL2, QR_LEVEL3) haben.

2. Verfahren nach Anspruch 1,
   **dadurch gekennzeichnet,**
   **dass** als Wert des definierten Bezugspunkts (SWA_CENTER) der Zwischenwert (SWA_CENTER_LEVEL1, SWA_CENTER_LEVEL2, SWA_CENTER_LEVEL3) mit der höchsten Qualitätsstufe (QR_LEVEL1, QR_LEVEL2, QR_LEVEL3) verwendet wird oder dass der Wert des definierten Bezugspunkts (SWA_CENTER) aus einer Kombination mehrerer Zwischenwerte ermittelt wird, deren Qualitätsstufen höher als die Qualitätsstufe weiterer Zwischenwerte sind und eine Abweichung voneinander aufweisen, die geringer als eine vorgegebene Abweichung ist.

3. Verfahren nach einem der vorangegangenen Ansprüche,
   **dadurch gekennzeichnet,**
   **dass** für die Bestimmung der Qualitätsstufen (QR_LEVEL1, QR_LEVEL2, QR_LEVEL3) das Vorliegen einer oder mehrerer Fahrbedingungen aus einer Menge vorgegebener Fahrbedingungen geprüft wird, wobei das Vorliegen jeder der vorgegebenen Fahrbedingungen zu einer höheren Ungenauigkeit der Zwischenwerte (SWA_CENTER_LEVEL1, SWA_CENTER_LEVEL2, SWA_CENTER_LEVEL3) führt.

4. Verfahren nach Anspruch 3,
   **dadurch gekennzeichnet,**
   **dass** die Zwischenwerte (SWA_CENTER_LEVEL1, SWA_CENTER_LEVEL2, SWA_CENTER_LEVEL3) in den Detektionsmodulen (16, 17, 18, 19) aus zwei oder mehreren nacheinander ermittelten Einzelwerten bestimmt werden, wobei die Fahrbedingungen aus der Menge der vorgegebenen Fahrbedingungen, die bei der Ermittlung eines ersten Einzelwerts vorlagen, gespeichert werden, und die nachfolgende Ermittlung eines zweiten Einzelwerts nur dann vorgenommen wird, wenn keine zusätzlichen Fahrbedingungen der Menge von Fahrbedingungen vorliegt.

5. Verfahren nach Anspruch 3 oder 4,
   **dadurch gekennzeichnet,**
   **dass** die Menge der vorgegebenen Fahrbedingungen mehrere der folgenden Fahrbedingungen umfasst: die Fahrzeuggeschwindigkeit ist kleiner als ein vorgegebener Grenzwert, der Querneigungswinkel des Fahrzeugs ist größer als ein vorgegebener Schwellenwert, ein Fahrdynamikregelsystem des Fahrzeugs führt einen Regeleingriff zur Beeinflussung des Fahrverhaltens durch.

6. Verfahren nach einem der vorangegangenen Ansprüche,

**dadurch gekennzeichnet,**
**dass** es sich bei der ersten Größe um einen Lenkwinkel (δ) handelt, der den Drehwinkel eines Lenkrades (9) des Fahrzeugs repräsentiert und dass der definierte Bezugspunkt (SWA_CENTER) der Geradeausstellung des Lenkrads (9) entspricht.

7. Verfahren nach einem der vorangegangenen Ansprüche,
**dadurch gekennzeichnet,**
**dass** ein erstes Detektionsmodul (17) vorgesehen ist, das an eine Bestimmung des Werts des definierten Bezugspunkts (SWA_CENTER) der ersten Größe während einer Kurvenfahrt angepasst ist.

8. Verfahren nach Anspruch 7 ,
**dadurch gekennzeichnet,**
**dass** der Zwischenwert (SWA_CENTER_LEVEL1) in dem ersten Detektionsmodul (17) aus einer Differenz zwischen einem Absolutwert der ersten Größe, der in einem Fahrzeugmodell unter Heranziehung wenigstens eines gemessen Absolutwerts einer zweiten Größe berechnet wird, und einem aktuellen Wert der ersten Größe bestimmt wird.

9. Verfahren nach einem der vorangegangenen Ansprüche,
**dadurch gekennzeichnet,**
**dass** ein zweites Detektionsmodul (18) vorgesehen ist, das an eine Bestimmung des Werts des definierten Bezugspunktes (SWA_CENTER) der ersten Größe während einer Slalomfahrt und/oder einer Schlechtwegefahrt angepasst ist, wobei der in dem zweiten Detektionsmodul (18) ermittelte Zwischenwert (SWA_CENTER_LEVEL2) des definierten Bezugspunkts (SWA_CENTER) einem Wert der ersten Größe entspricht, der bei einem Vorzeichenwechsel einer gemessenen Gierrate des Fahrzeugs vorliegt.

10. Verfahren nach Anspruch 9 ,
**dadurch gekennzeichnet,**
**dass** dem zweiten Detektionsmodul (18) eine höhere Rangstufe zugeordnet ist als dem ersten Detektionsmodul (17).

11. Verfahren nach einem der vorangegangenen Ansprüche,
**dadurch gekennzeichnet,**
**dass** ein drittes Detektionsmodul (19) vorgesehen ist, das an eine Bestimmung des Werts des definierten Bezugspunkts (SWA_CENTER) der ersten Größe während einer Geradeausfahrt angepasst ist, wobei der Zwischenwert (SWA_CENTER_LEVEL3) des definierten Bezugspunkts (SWA_CENTER) einem Wert der ersten Größe entspricht, der vorliegt, während eine Geradeausfahrt festgestellt wird.

12. Verfahren nach Anspruch 11,
**dadurch gekennzeichnet,**
**dass** dem dritten Detektionsmodul (19) eine höhere Rangstufe zugewiesen wird, als dem zweiten Detektionsmodul (18).

13. Verfahren nach einem der vorangegangenen Ansprüche,
**dadurch gekennzeichnet,**
**dass** jedem Zwischenwert (SWA_CENTER_LEVEL1, SWA_CENTER_LEVEL2, SWA_CENTER_LEVEL3) eine Unsicherheit zugeordnet wird, die einer Abschätzung des Fehlers des Zwischenwerts entspricht, und dass aus den Unsicherheiten der für die Bestimmung des Werts des Bezugspunkts (SWA_CENTER) herangezogenen Zwischenwerte (SWA_CENTER_LEVEL1, SWA_CENTER_LEVEL2, SWA_CENTER_LEVEL3) eine Unsicherheit (SWA_UNCERTAINTY) des Werts des Bezugspunkts (SWA_CENTER) ermittelt wird.

14. Verfahren nach einem der vorangegangenen Ansprüche,
**dadurch gekennzeichnet,**
**dass** der Wert des Bezugspunkts (SWA_CENTER) zur Ermittlung eines Absolutwerts der ersten Größe herangezogen wird, wobei der Absolutwert in einem Fahrdynamikregelsystem verwendet wird.

15. Verfahren nach einem der vorangegangenen Ansprüche,
**dadurch gekennzeichnet,**
**dass** die Unsicherheit (SWA_UNCERTAINTY) des Werts des Bezugspunkts (SWA_CENTER) bei der Verwendung des Absolutwerts berücksichtigt wird.

16. Computerprogrammprodukt, das ein Computerprogramm aufweist, welches Anweisungen zur Ausführung eines Verfahrens nach einem der vorangegangenen Ansprüche mittels einer Recheneinheit umfasst.

17. Einrichtung zum Ermitteln eines Werts eines definierten ersten Bezugspunkts (SWA_CENTER) einer ersten Größe, die mittels eines inkremental messenden Sensors eines Kraftfahrzeugs gemessen wird, umfassend wenigstens zwei Detektionsmodule (16, 17, 18, 19), in denen jeweils ein Zwischenwert (SWA_CENTER_LEVEL1, SWA_CENTER_LEVEL2, SWA_CENTER_LEVEL3) des definierten Bezugspunkts (SWA_CENTER) unter Heranziehung wenigstens einer zweiten gemessenen Größe ermittelt wird, wobei jedes Detektionsmodul (16, 17, 18, 19) an die Bestimmung des Werts des definierten Bezugspunkts (SWA_CENTER) der ersten Größe in einer vorgegebenen Fahrsituation angepasst ist, und wobei jedes Detektionsmodul (16, 17, 18, 19) dazu ausgebildet ist, eine Qualitätsstufe (QR_LEVEL1, QR_LEVEL2, QR_LEVEL3) für den ermittelten Zwischenwert (SWA_CENTER_LEVEL1, SWA_CENTER_LEVEL2, SWA_CENTER_LEVEL3) zu bestimmen, und umfassend eine Arbitrierungseinrichtung (20), die dazu ausgebildet ist, die Qualitätsstufen (QR_LEVEL1, QR_LEVEL2, QR_LEVEL3) der in verschiedenen Detektionsmodulen (16, 17, 18, 19) ermittelten Zwischenwerte (SWA_CENTER_LEVEL1, SWA_CENTER_LEVEL2, SWA_CENTER_LEVEL3) zu vergleichen und den Wert des definierten Bezugspunkts (SWA_CENTER) aus den ermittelten Zwischenwerten (SWA_CENTER_LEVEL1, SWA_CENTER_LEVEL2, SWA_CENTER_LEVEL3) nach Maßgabe des Ergebnisses des Vergleichs der Qualitätsstufen (QR_LEVEL1, QR_LEVEL2, QR_LEVEL3) zu bestimmen, wobei jedem Detektionsmodul (16, 17, 18, 19) eine Rangstufe entsprechend einer erwarteten Genauigkeit des in dem Detektionsmodul (16, 17, 18, 19) ermittelten Zwischenwerts (SWA_CENTER_LEVEL1, SWA_CENTER_LEVEL2, SWA_CENTER_LEVEL3) zugeordnet wird, und wobei als Wert des definierten Bezugspunkts (SWA_CENTER) der Zwischenwert (SWA_CENTER_LEVEL1, SWA_CENTER_LEVEL2, SWA_CENTER_LEVEL3) verwendet wird, welcher in dem Detektionsmodul (16, 17, 18, 19) mit höherer Rangstufe ermittelt worden ist, wenn in mehreren Detektionsmodulen (16, 17, 18, 19) ermittelte Zwischenwerte (SWA_CENTER_LEVEL1, SWA_CENTER_LEVEL2, SWA_CENTER_LEVEL3) übereinstimmende Qualitätsstufen (QR_LEVEL1, QR_LEVEL2, QR_LEVEL3) haben.

## Claims

1. Method for acquiring a value of a defined first reference point (SWA_CENTER) of a first variable which is measured by means of an incrementally measuring sensor of a motor vehicle, wherein

   - intermediate values (SWA_CENTER_LEVEL1, SWA_CENTER_LEVEL2, SWA_CENTER_LEVEL3) of the defined reference point (SWA_CENTER) are acquired in at least two detection modules (16, 17, 18, 19) using at least one second measured variable, wherein each detection module (16, 17, 18, 19) is adapted to the determination of the value of the defined reference point (SWA_CENTER) of the first variable in a predefined driving situation,
   - a quality level (QR_LEVEL1, QR_LEVEL2, QR_LEVEL3) is determined for each intermediate value (SWA_CENTER_LEVEL1, SWA_CENTER_LEVEL2, SWA_CENTER_LEVEL3) which is acquired,
   - the quality levels (QR_LEVEL1, QR_LEVEL2, QR_LEVEL3) of the intermediate values (SWA_CENTER_LEVEL1, SWA_CENTER_LEVEL2, SWA_CENTER_LEVEL3) which are acquired in various detection modules (16, 17, 18, 19) are compared,
   - the value of the defined reference point (SWA_CENTER) is determined from the acquired intermediate values (SWA_CENTER_LEVEL1, SWA_CENTER_LEVEL2, SWA_CENTER_LEVEL3) in accordance with the result of the comparison of the quality levels (QR_LEVEL1, QR_LEVEL2, QR_LEVEL3),
   - each detection module (16, 17, 18, 19) is assigned a ranking corresponding to an expected level of precision of the intermediate value (SWA_CENTER_LEVEL1, SWA_CENTER_LEVEL2, SWA_CENTER_LEVEL3) which is acquired in the detection module (16, 17, 18, 19), and
   - the intermediate value (SWA_CENTER_LEVEL1, SWA_CENTER_LEVEL2, SWA_CENTER_LEVEL3) which has been acquired with a relatively high ranking in the detection module (16, 17, 18, 19) is used as the value for the defined reference point (SWA_CENTER) if intermediate values (SWA_CENTER_LEVEL1, SWA_CENTER_LEVEL2, SWA_CENTER_LEVEL3) which are acquired in a plurality of detection modules (16, 17, 18, 19) have corresponding quality levels (QR_LEVEL1, QR_LEVEL2, QR_LEVEL3).

2. Method according to Claim 1, **characterized in that** the intermediate value (SWA_CENTER_LEVEL1, SWA_CENTER_LEVEL2, SWA_CENTER_LEVEL3) with the highest quality level (QR_LEVEL1, QR_LEVEL2, QR_LEVEL3) is used as the value for the defined reference point (SWA_CENTER), or **in that** the value of the defined reference point (SWA_CENTER) is acquired from a combination of a plurality of intermediate values whose quality levels are higher than the quality level of further intermediate values and differ from one another by less than a predefined difference.

3. Method according to either of the preceding claims, **characterized in that**, for the determination of the quality levels (QR_LEVEL1, QR_LEVEL2, QR_LEVEL3), checking is carried out for the presence of one or more driving conditions from a set of predefined driving conditions, wherein the presence of each of the predefined driving conditions leads to a lower precision level of the intermediate values (SWA_CENTER_LEVEL1, SWA_CENTER_LEVEL2, SWA_CENTER_LEVEL3).

4. Method according to Claim 3, **characterized in that** the intermediate values (SWA_CENTER_LEVEL1, SWA_CENTER_LEVEL2, SWA_CENTER_LEVEL3) in the detection modules (16, 17, 18, 19) are determined from two or more successively acquired individual values, wherein the driving conditions from the set of predefined driving conditions which were present when a first individual value was acquired are stored, and a second individual value is subsequently acquired only if no additional driving conditions from the set of driving conditions is present.

5. Method according to Claim 3 or 4, **characterized in that** the set of predefined driving conditions comprises a plurality of the following driving conditions: the velocity of the vehicle is lower than a predefined limiting value, the angle of lateral inclination of the vehicle is greater than a predefined threshold value, a vehicle movement dynamics control system of the vehicle carries out a control intervention for influencing the driving behavior.

6. Method according to one of the preceding claims, **characterized in that** the first variable is a steering angle ($\delta$) which represents the rotational angle of a steering wheel (9) of the vehicle, and **in that** the defined reference point (SWA_CENTER) corresponds to the straight-ahead position of the steering wheel (9).

7. Method according to one of the preceding claims, **characterized in that** a first detection module (17) is provided which is adapted to a determination of the value of the defined reference point (SWA_CENTER) of the first variable during cornering.

8. Method according to Claim 7, **characterized in that** in the first detection module (17), the intermediate value (SWA_CENTER_LEVEL1) is determined from a difference between an absolute value of the first variable, which is calculated in a vehicle model using at least one measured absolute value of a second variable, and a current value of the first variable.

9. Method according to one of the preceding claims, **characterized in that** a second detection module (18) is provided which is adapted to a determination of the value of the defined reference point (SWA_CENTER) of the first variable during slalom travel and/or during travel on a poor underlying surface, wherein the intermediate value (SWA_CENTER_LEVEL2) for the defined reference point (SWA_CENTER) which is acquired in the second detection module (18) corresponds to a value of the first variable which is present when the sign of a measured yaw rate of the vehicle changes.

10. Method according to Claim 9, **characterized in that** a higher ranking is assigned to the second detection module (18) than to the first detection module (17).

11. Method according to one of the preceding claims, **characterized in that** a third detection module (19) is provided which is adapted to a determination of the value of the defined reference point (SWA_CENTER) of the first variable during straight-ahead travel, wherein the intermediate value (SWA_CENTER_LEVEL3) of the defined reference point (SWA_CENTER) corresponds to a value of the first variable which is present while straight-ahead travel is detected.

12. Method according to Claim 11, **characterized in that** the third detection module (19) is allocated a higher ranking than the second detection module (18).

13. Method according to one of the preceding claims, **characterized in that** each intermediate value (SWA_CENTER_LEVEL1, SWA_CENTER_LEVEL2, SWA_CENTER_LEVEL3) is assigned an uncertainty level which corresponds to an estimate of the error in the intermediate value, and **in that** a level of uncertainty (SWA_UNCERTAINTY) of the value of the reference point (SWA_CENTER) is determined from the uncertainty levels of the intermediate values (SWA_CENTER_LEVEL1, SWA_CENTER_LEVEL2, SWA_CENTER_LEVEL3) which are used to determine the value of the reference point (SWA_CENTER).

**14.** Method according to one of the preceding claims, **characterized in that** the value of the reference point (SWA_CENTER) is used to acquire an absolute value of the first variable, wherein the absolute value is used in a vehicle movement dynamics control system.

**15.** Method according to one of the preceding claims, **characterized in that** the uncertainty level (SWA_UNCERTAINTY) of the value of the reference point (SWA_CENTER) is taken into account in the use of the absolute value.

**16.** Computer program product which has a computer program which comprises instructions for the execution of a method according to one of the preceding claims by means of a computing unit.

**17.** Device for acquiring a value of a defined first reference point (SWA_CENTER) of a first variable which is measured by means of an incrementally measuring sensor of a motor vehicle, comprising at least two detection modules (16, 17, 18, 19), in each of which an intermediate value (SWA_CENTER_LEVEL1, SWA_CENTER_LEVEL2, SWA_CENTER_LEVEL3) of the defined reference point (SWA_CENTER) is acquired using at least one second measured variable, wherein each detection module (16, 17, 18, 19) is adapted to the determination of the value of the defined reference point (SWA_CENTER) of the first variable in a predefined driving situation, and wherein each detection module (16, 17, 18, 19) is designed to determine a quality level (QR_LEVEL1, QR_LEVEL2, QR_LEVEL3) for the acquired intermediate value (SWA_CENTER_LEVEL1, SWA_CENTER_LEVEL2, SWA_CENTER_LEVEL3), and comprising an arbitration device (20) which is designed to compare the quality levels (QR_LEVEL1, QR_LEVEL2, QR_LEVEL3) of the intermediate values (SWA_CENTER_LEVEL1, SWA_CENTER_LEVEL2, SWA_CENTER_LEVEL3) which are acquired in various detection modules (16, 17, 18, 19) and to determine the value of the defined reference point (SWA_CENTER) from the acquired intermediate values (SWA_CENTER_LEVEL1, SWA_CENTER_LEVEL2, SWA_CENTER_LEVEL3) in accordance with the result of the comparison of the quality levels (QR_LEVEL1, QR_LEVEL2, QR_LEVEL3), wherein each detection module (16, 17, 18, 19) is assigned a ranking corresponding to an expected level of precision of the intermediate value (SWA_CENTER_LEVEL1, SWA_CENTER_LEVEL2, SWA_CENTER_LEVEL3) which is acquired in the detection module (16, 17, 18, 19), and wherein the intermediate value (SWA_CENTER_LEVEL1, SWA_CENTER_LEVEL2, SWA_CENTER_LEVEL3) which has been acquired with a relatively high ranking in the detection module (16, 17, 18, 19) is used as the value for the defined reference point (SWA_CENTER) if intermediate values (SWA_CENTER_LEVEL1, SWA_CENTER_LEVEL2, SWA_CENTER_LEVEL3) which are acquired in a plurality of detection modules (16, 17, 18, 19) have corresponding quality levels (QR_LEVEL1, QR_LEVEL2, QR_LEVEL3).

**Revendications**

**1.** Procédé de détermination d'une valeur d'un premier point de référence défini (SWA_CENTER) d'une première grandeur mesurée au moyen d'un détecteur à mesure incrémentielle d'un véhicule automobile, dans lequel

- des valeurs intermédiaires (SWA_CENTER_LEVEL1, SWA_CENTER_LEVEL2, SWA_CENTER_LEVEL3) du point de référence défini (SWA_CENTER) sont déterminées dans au moins deux modules de détection (16, 17, 18, 19) en tenant compte d'au moins une deuxième grandeur mesurée, dans lequel chaque module de détection (16, 17, 18, 19) est adapté à la détermination de la valeur du point de référence défini (SWA_CENTER) de la première grandeur dans une situation de conduite prédéterminée,
- un niveau de qualité (QR_LEVEL1, QR_LEVEL2, QR_LEVEL3) est déterminé pour chaque valeur intermédiaire déterminée (SWA_CENTER_LEVEL1, SWA_CENTER_LEVEL2, SWA_CENTER_LEVEL3),
- des niveaux de qualité (QR_LEVEL1, QR_LEVEL2, QR_LEVEL3) des valeurs intermédiaires (SWA_CENTER_LEVEL1, SWA_CENTER_LEVEL2, SWA_CENTER_LEVEL3) déterminées dans les différents modules de détection (16, 17, 18, 19) sont comparés,
- la valeur du point de référence défini (SWA_CENTER) est déterminée à partir des valeurs intermédiaires définies (SWA_CENTER_LEVEL1, SWA_CENTER_LEVEL2, SWA_CENTER_LEVEL3) conformément au résultat de la comparaison des niveaux de qualité (QR_LEVEL1, QR_LEVEL2, QR_LEVEL3),
- un niveau de classement correspondant à une précision attendue de la valeur intermédiaire (SWA_CENTER_LEVEL1, SWA_CENTER_LEVEL2, SWA_CENTER_LEVEL3) déterminée dans le module de détection (16, 17, 18, 19) est associé à chaque module de détection (16, 17, 18, 19), et
- la valeur intermédiaire (SWA_CENTER_LEVEL1, SWA_CENTER_LEVEL2, SWA_CENTER_LEVEL3) qui a été déterminée dans le module de détection (16, 17, 18, 19) avec le niveau de classement le plus élevé est utilisée en tant que valeur du point de référence défini (SWA_CENTER) lorsque des valeurs intermédiaires (SWA_CENTER_LEVEL1, SWA_CENTER_LEVEL2, SWA_CENTER_LEVEL3) déterminées dans plusieurs modules de détection (16, 17, 18, 19) présentent des niveaux de qualité (QR_LEVEL1, QR_LEVEL2, QR_LEVEL3) concordants.

2. Procédé selon la revendication 1,
**caractérisé en ce que** la valeur intermédiaire (SWA_CENTER_LEVEL1, SWA_CENTER_LEVEL2, SWA_CENTER_LEVEL3) ayant le niveau de qualité le plus élevé (QR_LEVEL1, QR_LEVEL2, QR_LEVEL3) est utilisée en tant que valeur du point de référence défini (SWA_CENTER) ou **en ce que** la valeur du point de référence défini (SWA_CENTER) est déterminée à partir d'une combinaison de plusieurs valeurs intermédiaires dont les niveaux de qualité sont supérieurs aux niveaux de qualité d'autres valeurs intermédiaires et dont l'écart entre ceux-ci est inférieur à un écart prédéterminé.

3. Procédé selon l'une quelconque des revendications précédentes,
**caractérisé en ce que**, pour déterminer les niveaux de qualité (QR_LEVEL1, QR_LEVEL2, QR_LEVEL3), la présence d'une ou de plusieurs conditions de conduite est vérifiée dans un ensemble de conditions de conduite prédéterminées, dans lequel la présence de chacune des conditions de conduite prédéterminées conduit à une imprécision plus élevée des valeurs intermédiaires (SWA_CENTER_LEVEL1, SWA_CENTER_LEVEL2, SWA_CENTER_LEVEL3).

4. Procédé selon la revendication 3,
**caractérisé en ce que** les valeurs intermédiaires (SWA_CENTER_LEVEL1, SWA_CENTER_LEVEL2, SWA_CENTER_LEVEL3) sont déterminées dans les modules de détection (16, 17, 18, 19) à partir de deux valeurs individuelles déterminées consécutivement ou plus, dans lequel les conditions de conduite, dans un ensemble desdites conditions de conduite prédéterminées présentes lors de la détermination d'une première valeur individuelle, sont stockées, et la détermination effectuée ensuite d'une deuxième valeur individuelle n'est effectuée que lorsqu'il n'existe plus de condition de conduite supplémentaire dans l'ensemble des conditions de conduite.

5. Procédé selon la revendication 3 ou 4,
**caractérisé en ce que** l'ensemble des conditions de conduite prédéterminées comprend plusieurs des conditions de conduite suivantes : la vitesse du véhicule est inférieure à une valeur limite prédéterminée, l'angle d'inclinaison transversale du véhicule est supérieur à une valeur de seuil prédéterminée, un système de régulation de la dynamique de conduite du véhicule conduit à une intervention de régulation agissant sur le comportement de conduite.

6. Procédé selon l'une quelconque des revendications précédentes,
**caractérisé en ce que** la première grandeur est un angle de braquage ($\delta$) qui représente l'angle de rotation d'une roue directrice (9) du véhicule et **en ce que** le point de référence défini (SWA_CENTER) correspond à la position de déplacement en ligne droite de la roue directrice (9).

7. Procédé selon l'une quelconque des revendications précédentes,
**caractérisé en ce qu'**il est prévu un premier module de détection (17) qui est adapté à une détermination de la valeur du point de référence défini (SWA_CENTER) de la première grandeur pendant une conduite en virage.

8. Procédé selon la revendication 7,
**caractérisé en ce que** la valeur intermédiaire (SWA_CENTER_LEVEL1) est déterminée dans le premier module de détection (17) à partir d'une différence entre une valeur absolue de la première grandeur, qui est calculée conformément à un modèle de véhicule en tenant compte d'au moins une valeur absolue mesurée d'une deuxième grandeur, et d'une valeur actuelle de la première grandeur.

9. Procédé selon l'une quelconque des revendications précédentes,
**caractérisé en ce qu'**il est prévu un deuxième module de détection (18) qui est adapté à une détermination de la valeur du point de référence défini (SWA_CENTER) de la première grandeur pendant une conduite en slalom et/ou une conduite sur trajet défectueux, dans lequel la valeur intermédiaire (SWA_CENTER_LEVEL2) déterminée dans le deuxième module de détection (18) du point de référence défini (SW_CENTER) correspond à une valeur de la première grandeur qui est présente lors d'un changement de signe d'une vitesse de lacet du véhicule.

10. Procédé selon la revendication 9,
**caractérisé en ce que** le niveau de classement associé au deuxième module de détection (18) est plus élevé que celui associé au premier module de détection (17).

**11.** Procédé selon l'une quelconque des revendications précédentes,
**caractérisé en ce qu'**il est prévu un troisième module de détection (19) qui est adapté à une détermination de la valeur du point de référence défini (SWA_CENTER) de la première grandeur pendant une conduite en ligne droite, dans lequel la valeur intermédiaire (SWA_CENTER_LEVEL3) du point de référence défini (SWA_CENTER) correspond à une valeur de la première grandeur qui est présente pendant une conduite en ligne droite.

**12.** Procédé selon la revendication 11,
**caractérisé en ce que** le niveau de classement attribué au troisième module de détection (19) est plus élevé que celui attribué au deuxième module de détection (18).

**13.** Procédé selon l'une quelconque des revendications précédentes,
**caractérisé en ce qu'**une incertitude est associée à chaque valeur intermédiaire (SWA_CENTER_LEVEL1, SWA_CENTER_LEVEL2, SWA_CENTER_LEVEL3), laquelle incertitude correspond à une estimation de l'erreur de la valeur intermédiaire, et **en ce qu'**une incertitude (SWA_UNCERTAINTY) de la valeur du point de référence (SWA_CENTER) est déterminée à partir des incertitudes des valeurs intermédiaires (SWA_CENTER_LEVEL1, SWA_CENTER_LEVEL2, SWA_CENTER_LEVEL3) prises en compte pour la détermination de la valeur du point de référence (SWA_CENTER).

**14.** Procédé selon l'une quelconque des revendications précédentes,
**caractérisé en ce que** la valeur du point de référence (SWA_CENTER) est prise en compte pour déterminer une valeur absolue de la première grandeur, dans lequel la valeur absolue est utilisée dans un système de régulation de la dynamique de conduite.

**15.** Procédé selon l'une quelconque des revendications précédentes,
**caractérisé en ce que** l'incertitude (SWA_UNCERTAINTY) de la valeur du point de référence (SWA_CENTER) est prise en compte lors de l'utilisation de la valeur absolue.

**16.** Produit de programme d'ordinateur qui comporte un programme d'ordinateur comprenant des instructions destinées à mettre en oeuvre un procédé selon l'une quelconque des revendications précédentes au moyen d'une unité de calcul.

**17.** Dispositif destiné à déterminer une valeur d'un premier point de référence défini (SWA_CENTER) d'une première grandeur mesurée au moyen d'un capteur à mesure incrémentielle d'un véhicule automobile, comprenant au moins deux modules de détection (16, 17, 18, 19) dans lesquels une valeur intermédiaire (SWA_CENTER_LEVEL1, SWA_CENTER_LEVEL2, SWA_CENTER_LEVEL3) du point de référence défini (SWA_CENTER) est respectivement déterminée en tenant compte d'au moins une deuxième grandeur mesurée, dans lequel chaque module de détection (16, 17, 18, 19) est adapté à la détermination de la valeur du point de référence défini (SWA_CENTER) de la première grandeur dans une situation de conduite prédéterminée, et dans lequel chaque module de détection (16, 17, 18, 19) est conçu pour déterminer un niveau de qualité (QR_LEVEL1, QR_LEVEL2, QR_LEVEL3) pour la valeur intermédiaire déterminée (SWA_CENTER_LEVEL1, SWA_CENTER_LEVEL2, SWA_CENTER_LEVEL3), et comprenant un dispositif d'arbitrage (20) conçu pour comparer les niveaux de qualité (QR_LEVEL1, QR_LEVEL2, QR_LEVEL3) des valeurs intermédiaires (SWA_CENTER_LEVEL1, (SWA_CENTER_LEVEL2, SWA_CENTER_LEVEL3) déterminées dans différents modules de détection (16, 17, 18, 19) et pour déterminer la valeur du point de référence défini (SWA_CENTER) à partir des valeurs intermédiaires déterminées (SWA_CENTER_LEVEL1, SWA_CENTER_LEVEL2, SWA_CENTER_LEVEL3) conformément au résultat de la comparaison des niveaux de qualité (QR_LEVEL1, QR_LEVEL2, QR_LEVEL3), dans lequel un niveau de classement correspondant à une précision attendue de la valeur intermédiaire (SWA_CENTER_LEVEL1, SWA_CENTER_LEVEL2, SWA_CENTER_LEVEL3) déterminée dans le module de détection (16, 17, 18, 19) est associé à chaque module de détection (16, 17, 18, 19), et dans lequel la valeur intermédiaire (SWA_CENTER_LEVEL1, SWA_CENTER_LEVEL2, SWA_CENTER_LEVEL3) qui a été déterminée dans le module de détection (16, 17, 18, 19) avec le niveau de classement le plus élevé est utilisée en tant que valeur du point de référence défini (SWA_CENTER) lorsque des valeurs intermédiaires (SWA_CENTER_LEVEL1, SWA_CENTER_LEVEL2, SWA_CENTER_LEVEL3) déterminées dans plusieurs modules de détection (16, 17, 18, 19) présentent des niveaux de qualité (QR_LEVEL1, QR_LEVEL2, QR_LEVEL3) concordants.

Fig.1

Fig. 2

Fig.3

**EP 2 005 120 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004117088 A1
- US 5787375 A